(19) **Europäisches Patentamt / European Patent Office / Office européen des brevets**

(11) **EP 4 350 577 B1**

(12) **EUROPEAN PATENT SPECIFICATION**

(45) Date of publication and mention
of the grant of the patent:
**20.08.2025   Bulletin 2025/34**

(21) Application number: **23200782.3**

(22) Date of filing: **29.09.2023**

(51) International Patent Classification (IPC):
*G06N 3/045* (2023.01)      *G06N 3/08* (2023.01)
*G06N 3/0475* (2023.01)

(52) Cooperative Patent Classification (CPC):
**G06N 3/0475; G06N 3/0455; G06N 3/09;
G06N 5/041**

(54) **DATA GENERATION METHOD BASED ON DEEP LEARNING MODEL, AND TRAINING METHOD AND APPARATUS**

DATENERZEUGUNGSVERFAHREN AUF BASIS EINES TIEFENLERNMODELLS UND TRAININGSVERFAHREN UND -VORRICHTUNG

PROCÉDÉ DE GÉNÉRATION DE DONNÉES BASÉ SUR UN MODÈLE D'APPRENTISSAGE PROFOND, ET PROCÉDÉ ET APPAREIL D'APPRENTISSAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **10.03.2023   CN 202310246603**

(43) Date of publication of application:
**10.04.2024   Bulletin 2024/15**

(73) Proprietor: **Beijing Baidu Netcom
Science Technology Co., Ltd.
Beijing 100085 (CN)**

(72) Inventors:
  • **WANG, Haifeng**
    **Beijing 100085 (CN)**
  • **WU, Hua**
    **Beijing 100085 (CN)**
  • **TIAN, Hao**
    **Beijing 100085 (CN)**
  • **SUN, Yu**
    **Beijing 100085 (CN)**
  • **WU, Tian**
    **Beijing 100085 (CN)**
  • **HONG, Dou**
    **Beijing 100085 (CN)**

(74) Representative: **von Tietzen und Hennig, Nikolaus
et al
Lorenz Seidler Gossel
Rechtsanwälte Patentanwälte
Partnerschaft mbB
Widenmayerstraße 23
80538 München (DE)**

(56) References cited:
  • **SCHICK TIMO ET AL: "Toolformer: Language
    Models Can Teach Themselves to Use Tools",
    ARXIV (CORNELL UNIVERSITY), 9 February 2023
    (2023-02-09), Ithaca, pages 1 - 17, XP093135695,
    Retrieved from the Internet <URL:https://arxiv.
    org/pdf/2302.04761.pdf> [retrieved on 20240228],
    DOI: 10.48550/arxiv.2302.04761**
  • **ROMAL THOPPILAN ET AL: "LaMDA: Language
    Models for Dialog Applications", ARXIV.ORG,
    CORNELL UNIVERSITY LIBRARY, 201 OLIN
    LIBRARY CORNELL UNIVERSITY ITHACA, NY
    14853, 20 January 2022 (2022-01-20),
    XP091153888**
  • **GR\'EGOIRE MIALON ET AL: "Augmented
    Language Models: a Survey", ARXIV.ORG,
    CORNELL UNIVERSITY LIBRARY, 201 OLIN
    LIBRARY CORNELL UNIVERSITY ITHACA, NY
    14853, 15 February 2023 (2023-02-15),
    XP091439004**

**Description**

**TECHNICAL FIELD**

The present disclosure relates to the field of artificial intelligence technologies, in particular, to the field of natural language processing and deep learning technologies, and specifically to a data generation method and apparatus based on a deep learning model, a training method and apparatus for a deep learning model, an electronic device, and a computer-readable storage medium.

**BACKGROUND**

Artificial intelligence is a subject on making a computer simulate some thinking processes and intelligent behaviors (such as learning, reasoning, thinking, and planning) of a human, and involves both hardware-level technologies and software-level technologies. Artificial intelligence hardware technologies generally include the technologies such as sensors, dedicated artificial intelligence chips, cloud computing, distributed storage, and big data processing. Artificial intelligence software technologies mainly include the following several general directions: natural language processing technologies, computer vision technologies, speech recognition technologies and machine learning/deep learning, big data processing technologies, and knowledge graph technologies.

Methods described in this section are not necessarily methods that have been previously conceived or employed. It should not be assumed that any of the methods described in this section is considered to be the prior art just because they are included in this section, unless otherwise indicated expressly. Similarly, the problem mentioned in this section should not be considered to be universally recognized in any prior art, unless otherwise indicated expressly.

Schick Timo ET AL: "Toolformer: Language Models Can Teach Themselves to Use Tools", arXiv (Cornell University), 9 February 2023 (2023-02-09), pages 1-17 discloses a language model "toolformer" which can teach itself to use external tools via simple APIs. The document specifically describes the process of invoking various tool APIs, such as QA system, search engine, and calculator, by generating specials tokens. provides a series of tools, including a search engine, calendar, QA system, and machine translation. However, the teaching is silent about any content related to an external memory bank.

**SUMMARY**

The present disclosure provides a data generation method and apparatus based on a deep learning model, a training method and apparatus for a deep learning model, an electronic device, and a computer-readable storage medium.

According to an aspect of the present disclosure, there is provided a data generation method based on a deep learning model including the features of claim 1. The deep learning model is able to generate reply data based on input data of a user. The data generation method includes: determining an initial input for the deep learning model based on input data from a user; obtaining a first output of the deep learning model, where a first functional component different from the deep learning model needs to be called in response to that the deep learning model determines to generate a reply based on the initial input, and the first output includes a first token for calling the first functional component and a first intermediate inquiry determined based on the initial input and recognizable by the first functional component; obtaining a first intermediate result determined by the first functional component based on the first intermediate inquiry; determining a second input for the deep learning model based at least on the initial input and the first intermediate result; and obtaining a second output of the deep learning model for generating the reply to the initial input.

According to another aspect of the present disclosure, there is provided a data generation apparatus based on a deep learning model including the features of claim 6. The deep learning model is able to generate reply data based on input data of a user. The data generation apparatus includes: a first determining unit configured to determine an initial input for the deep learning model based on input data from a user; a first obtaining unit configured to obtain a first output of the deep learning model, where a first functional component different from the deep learning model needs to be called in response to that the deep learning model determines to generate a reply based on the initial input, and the first output includes a first token for calling the first functional component and a first intermediate inquiry determined based on the initial input and recognizable by the first functional component; a second obtaining unit configured to obtain a first intermediate result determined by the first functional component based on the first intermediate inquiry; a second determining unit configured to determine a second input for the deep learning model based at least on the initial input and the first intermediate result; and a third obtaining unit configured to obtain a second output of the deep learning model for generating the reply to the initial input.

According to one or more embodiments of the present disclosure, the present disclosure uses the deep learning model to decide whether to call the first functional component different from the deep learning model, generates, by using the deep learning model when it is determined that the first functional component needs to be called, the first intermediate inquiry recognizable by the first functional component, then calls the first functional component by using the first intermediate inquiry, so as to obtain the first intermediate result, and finally generates a result for the initial input of the user based on the first intermediate result by using the deep learning model.

Through the above method, capability enhancement is further implemented for the deep learning model that has been able to perform tasks such as understanding and generation, thereby improving the quality of the finally generated reply. In addition, the intermediate inquiry recognizable by the external functional component is directly generated by using the deep learning model, such that the intermediate inquiry and the obtained intermediate result can be more in line with potential intentions in the initial input of the user, so that the model can output the reply that meets requirements of the user.

It should be understood that the content described in this section is not intended to identify critical or important features of the embodiments of the present disclosure, and is not used to limit the scope of the present disclosure. Other features of the present disclosure will be easily understood through the following description.

## BRIEF DESCRIPTION OF THE DRAWINGS

The accompanying drawings exemplarily show embodiments and form a part of the specification, and are used to explain exemplary implementations of the embodiments together with a written description of the specification. The embodiments shown are merely for illustrative purposes and do not limit the scope of the claims. Throughout the accompanying drawings, the same reference numerals denote similar but not necessarily same elements.

FIG. 1 is a schematic diagram of an exemplary system in which various methods described herein can be implemented, according to an embodiment of the present disclosure;

FIG. 2 is a flowchart of a data generation method according to an embodiment of the present disclosure;

FIG. 3 is a schematic diagram of querying memory in an external memory bank according to an embodiment of the present disclosure;

FIG. 4 is a schematic diagram of adding and deleting memory in an external memory bank according to an embodiment of the present disclosure;

FIG. 5 is a flowchart of determining an initial input for a deep learning model that may implement an embodiment of the present disclosure;

FIG. 6 is a schematic diagram of memory capability enhancement according to an embodiment of the present disclosure;

FIG. 7 is a schematic diagram of generating, by a deep learning model, a reply based on an initial input according to an embodiment of the present disclosure;

FIG. 8 is a schematic diagram of knowledge enhancement according to an embodiment of the present disclosure;

FIG. 9 is a schematic diagram of capability expansion according to an embodiment of the present disclosure;

FIG. 10 is a flowchart of generating a reply for an initial input that may implement an embodiment of the present disclosure;

FIG. 11 is a schematic diagram of enhancement of a plurality of capabilities according to an embodiment of the present disclosure;

FIG. 12 is a schematic diagram of enhancement of a plurality of capabilities according to an embodiment of the present disclosure;

FIG. 13 is a flowchart of determining an initial input for a deep learning model that may implement an embodiment of the present disclosure;

FIG. 14 is a schematic diagram of aggregated presentation of answers that may implement an embodiment of the present disclosure;

FIG. 15 is a schematic diagram of structured presentation of answers that may implement an embodiment of the present disclosure;

FIG. 16 is a schematic diagram of interactive presentation that may implement an embodiment of the present disclosure;

FIG. 17 is a flowchart of a training method for a deep learning model according to an embodiment of the present disclosure;

FIG. 18 is a schematic diagram of a knowledge fusion technology according to an embodiment of the present disclosure;

FIG. 19 is a flowchart of a training method for a deep learning model according to an embodiment of the present disclosure;

FIG. 20 is a flowchart of performing a ranking operation on a plurality of sample search results according to an embodiment of the present disclosure;

FIG. 21 is a flowchart of a training method for a deep learning model according to an embodiment of the present disclosure;

FIG. 22 is a block diagram of a structure of a data generation apparatus according to an embodiment of the present disclosure;

FIG. 23 is a block diagram of a structure of a training apparatus for a deep learning model according to an embodiment of the present disclosure; and

FIG. 24 is a block diagram of a structure of an exemplary electronic device that can be used to implement an embodiment of the present disclosure.

## DETAILED DESCRIPTION

Exemplary embodiments of the present disclosure are described below in conjunction with the accompanying drawings, where various details of the embodiments of the present disclosure are included to facilitate understanding, and should only be considered as exemplary.

For clarity and conciseness, the description of well-known functions and structures is omitted in the following description.

In the present disclosure, unless otherwise stated, the terms "first", "second", etc., used to describe various elements are not intended to limit the positional, temporal or importance relationship of these elements, but rather only to distinguish one element from the other. In some examples, the first element and the second element may refer to the same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, there may be one or more elements, unless otherwise expressly indicated in the context. Moreover, the term "and/or" used in the present disclosure encompasses any of and all possible combinations of listed items.

In related technologies, an intelligent system can generate corresponding reply content based on input data of a user. However, an existing intelligent system has a limited capability in processing input data of a user, resulting in poor quality of generated reply content.

In order to solve the above problems, the present disclosure uses a deep learning model to decide whether to call a first functional component different from the deep learning model, generates, by using the deep learning model when it is determined that the first functional component needs to be called, a first intermediate inquiry recognizable by the first functional component, then calls the first functional component by using the first intermediate inquiry, so as to obtain a first intermediate result, and finally generates a result for an initial input of the user based on the first intermediate result by using the deep learning model.

Through the above method, capability enhancement is further implemented for the deep learning model that has been able to perform tasks such as understanding and generation, thereby improving the quality of a finally generated reply. In addition, the intermediate inquiry recognizable by the external functional component is directly generated by using the deep learning model, such that the intermediate inquiry and the obtained intermediate result can be more in line with potential intentions in the initial input of the user, so that the model can output the reply that meets requirements of the user.

The embodiments of the present disclosure will be described below in detail with reference to the accompanying drawings.

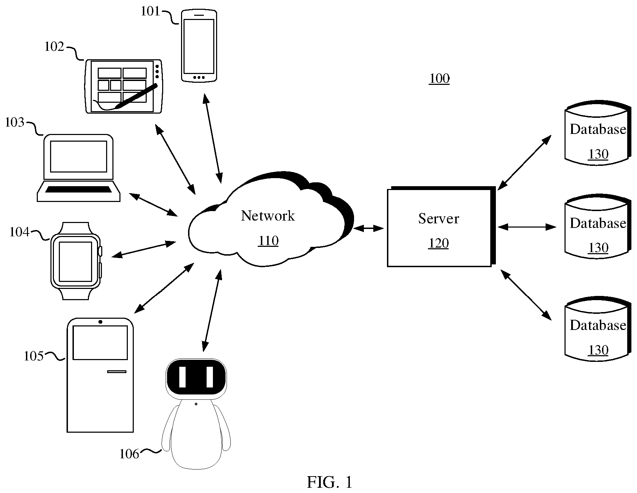

FIG. 1 is a schematic diagram of an exemplary system 100 in which various methods and apparatuses described herein can be implemented according to an embodiment of the present disclosure. Referring to FIG. 1, the system 100 includes one or more client devices 101, 102, 103, 104, 105, and 106, a server 120, and one or more communications networks 110 that couple the one or more client devices to the server 120. The client devices 101, 102, 103, 104, 105, and 106 may be configured to execute one or more applications.

In an embodiment of the present disclosure, the server 120 may run one or more services or software applications that enable a data generation method or a training method for a deep learning model in the present disclosure to be performed. In an exemplary embodiment, the deep learning model used to support an intelligent system may be deployed on the server.

In some embodiments, the server 120 may further provide other services or software applications that may include a non-virtual environment and a virtual environment. In some embodiments, these services may be provided as web-based services or cloud services, for example, provided to a user of the client device 101, 102, 103, 104, 105, and/or 106 in a software as a service (SaaS) model.

In the configuration shown in FIG. 1, the server 120 may include one or more components that implement functions performed by the server 120. These components may include software components, hardware components, or a combination thereof that can be executed by one or more processors. A user operating the client device 101, 102, 103, 104, 105, and/or 106 may sequentially use one or more client application programs to interact with the server 120, to use the services provided by these components. It should be understood that various different system configurations are possible, and may be different from that of the system 100. Therefore, FIG. 1 is an example of the system for implementing various methods described herein, and is not intended to be limiting.

The user may use the client devices 101, 102, 103, 104, 105, and/or 106 to input information to the intelligent system. The client device may provide an interface that enables the user of the client device to interact with the client device. The client device may also output information to the user via the interface, for example, may output, to the user, a reply generated by the intelligent system for a user input. Although FIG. 1 shows only six client devices, those skilled in the art will understand that any number of client devices are supported in the present disclosure.

The client device 101, 102, 103, 104, 105, and/or 106 may include various types of computer devices, such as a portable handheld device, a general-purpose computer (such as a personal computer and a laptop computer), a workstation computer, a wearable device, a smart screen device, a self-service terminal device, a service robot, a gaming system, a thin client, various messaging devices, and a sensor or other sensing devices. These computer devices can run various types and versions of software application programs and operating systems, such as MICROSOFT Windows, APPLE iOS, a UNIX-like operating system, and a Linux or Linux-like operating system (e.g., GOOGLE Chrome OS); or include various mobile operating systems, such as MICROSOFT Windows Mobile OS, iOS, Windows Phone, and Android. The portable handheld device may include a cellular phone, a smartphone, a tablet computer, a personal digital assistant (PDA), etc. The wearable device may include a head-mounted display (such as smart glasses) and other devices. The gaming system may include various handheld gaming devices, Internet-enabled gaming devices, etc. The client device can execute various different application programs, such as various Internet-related application programs, communication application programs (e.g., email application programs), and short message service (SMS) application programs, and can use various communication protocols.

The network 110 may be any type of network well known to those skilled in the art, and may use any one of a plurality of available protocols (including but not limited to TCP/IP, SNA, IPX, etc.) to support data communication. As a mere example, the one or more networks 110 may be a local area network (LAN), an Ethernet-based network, a token ring, a wide area network (WAN), the Internet, a virtual network, a virtual private network (VPN), an intranet, an extranet, a blockchain network, a public switched telephone network (PSTN), an infrared network, a wireless network (such as Bluetooth or Wi-Fi), and/or any combination of these and/or other networks.

The server 120 may include one or more general-purpose computers, a dedicated server computer (e.g., a personal computer (PC) server, a UNIX server, or a terminal server), a blade server, a mainframe computer, a server cluster, or any other suitable arrangement and/or combination. The server 120 may include one or more virtual machines running a virtual operating system, or other computing architectures related to virtualization (e.g., one or more flexible pools of logical storage devices that can be virtualized to maintain virtual storage devices of a server). In various embodiments, the server 120 can run one or more services or software applications that provide functions described below.

A computing unit in the server 120 can run one or more operating systems including any one of the above operating systems and any commercially available server operating system. The server 120 can also run any one of various additional server application programs and/or middle-tier application programs, including an HTTP server, an FTP server, a CGI server, a JAVA server, a database server, etc.

In some implementations, the server 120 may include one or more application programs to analyze and merge data feeds and/or event updates received from users of the client device 101, 102, 103, 104, 105, and/or 106. The server 120 may further include one or more application programs to display the data feeds and/or real-time events via one or more display devices of the client device 101, 102, 103, 104, 105, and/or 106.

In some implementations, the server 120 may be a server in a distributed system, or a server combined with a blockchain. The server 120 may alternatively be a cloud server, or an intelligent cloud computing server or intelligent cloud host with artificial intelligence technologies. The cloud server is a host product in a cloud computing service system, to overcome the shortcomings of difficult management and weak service scalability in conventional physical host and virtual private server (VPS) services.

The system 100 may further include one or more databases 130. In some embodiments, these databases can be used to store data and other information. For example, one or more of the databases 130 can be configured to store information such as an audio file and a video file. The databases 130 may reside in various locations. For example, a database used by the server 120 may be locally in the server 120, or may be remote from the server 120 and may communicate with the server 120 via a network-based or dedicated connection. The database 130 may be of different types. In some embodiments, the database used by the server 120 may be, for example, a relational database. One or more of these databases can store, update, and retrieve data from or to the database, in response to a command.

In some embodiments, one or more of the databases 130 may also be used by an application to store application data. The database used by the application may be of different types, for example, may be a key-value repository, an object repository, or a regular repository backed by a file system.

The system 100 of FIG. 1 may be configured and operated in various manners, such that the various methods and apparatuses described according to the present disclosure can be applied.

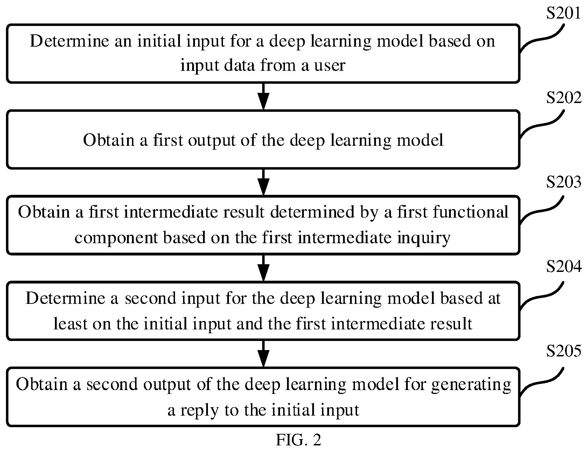

According to an aspect of the present disclosure, there is provided a data generation method based on a deep learning model. The deep learning model is able to generate reply data based on input data of a user. As shown in FIG. 2, the data generation method includes: step S201: determining an initial input for the deep learning model based on input data from a user; step S202: obtaining a first output of the deep learning model, where a first functional component different from the deep learning model needs to be called in response to that the deep learning model determines to generate a reply based on the initial input, and the first output includes a first token for calling the first functional component and a first intermediate inquiry determined based on the initial input and recognizable by the first functional component; step S203: obtaining a first intermediate result determined by the first functional component based on the first intermediate inquiry; step S204: determining a second input for the deep learning model based at least on the initial input and the first intermediate result; and step S205: obtaining a second output of the deep learning model for generating the reply to the initial input.

Therefore, through the above method, capability enhancement is further implemented for the deep learning model that has been able to perform tasks such as understanding and generation, thereby improving the quality of the finally generated reply. In addition, the intermediate inquiry recognizable by the external functional component is directly generated by using the deep learning model, such that the intermediate inquiry and the obtained intermediate result can be more in line with potential intentions in the initial input of the user, so that the model can output the reply that meets requirements of the user.

In the present disclosure, the deep learning model is also referred to as a large understanding and generation unified interactive model (large understanding and generation model or large unified model). The large understanding and generation model has end-to-end characteristics, and can directly generate reply data based on input data of a user without relying on functional components or other inputs external to the large understanding and generation model. In other words, the large understanding and generation model has a generation function. Furthermore, a system deployed with the large understanding and generation model may be referred to as an intelligent system. The intelligent system may further include an interaction module for receiving input data from a user and providing a finally generated reply to the user. In a conversation between the user and the intelligent system, the intelligent system can use the large understanding and generation model deployed on it to conduct a plurality of rounds of dialogues with the user.

The large understanding and generation model may use, for example, an N-layer Transformer network structure that has an encoder and a decoder, or a unified pre-trained language model (UniLM) network structure. It can be understood that the large understanding and generation model may alternatively be another neural network model based on the Transformer network structure, which is not limited here. An input and output of the large understanding and generation model are composed of tokens. Each token may correspond to a single character, a character, a word, a special symbol, or may correspond to an external functional component, as will be described below.

It can be understood that the deep learning model used in the data generation method described in the present disclosure may be trained by using a training method for a deep learning model that will be described below in the present disclosure.

Before step S201, the input data of the user may be obtained first. The input data of the user may be, for example, an input of the user to the intelligent system, and may include, for example, a text input, a voice input, and an image input. It can be understood that the input data of the user may alternatively be in another data form, which is not limited here. The input data of the user may be a factual question, an instruction for performing a specified task, or chat content. For different types of user inputs, the intelligent system can generate appropriate replies.

The first functional component is an external memory bank, and the external memory bank stores a first data group set related to the user. Each data group in the first data group set includes at least a historical input data item and a historical reply item generated by the deep learning model for the historical input data item. It can be understood that the historical input data item and the corresponding historical reply item may include, for example, a dialogue generated in historical conversations between the user and the intelligent system, and may alternatively include a dialogue generated in a current conversation between the user and the intelligent system. Therefore, the memory capability of the intelligent system is improved by setting the external memory bank to store long-term historical dialogues between the user and the intelligent system; and historical dialogues related to the user input are obtained, such that the deep learning model can generate, by referring to the historical dialogues, richer and more specific replies that are more targeted for the user, thereby improving the quality of replies, improving the intelligence of dialogues, and enhancing user experience.

According to some embodiments, each data group in the first data group set may further include an entry time item (or a time stamp) corresponding to a historical input data item and a historical reply item that are in the group. Therefore, through the setting of the entry time item, when historical dialogues in the external memory bank are queried and deleted, more operations can be implemented based on the entry time of the historical dialogues, thereby improving the timeliness of memory.

In some embodiments, each data group in the first data group set may further include a subject item corresponding to a historical input data item and a historical reply item that are in the group. In an exemplary embodiment, when memory is obtained, a historical dialogue having the same subject as a current dialogue may be directly obtained, or the subject item may be used as one of the basis for similarity calculation, so as to obtain more effective historical dialogues more efficiently. Therefore, through the setting of the subject item, specific memories can be converted into abstract memory, such that when historical dialogues in the external memory bank are queried and deleted, more operations can be implemented based on the subjects of the historical dialogues.

In an exemplary embodiment, the data groups in the external memory bank may be shown in Table 1 below.

Table 1

| Historical Input Data Item | Historical Reply Item | Entry Time Item | Subject Item |
|---|---|---|---|
| What is an area of the XX middle school? | The XX middle school covers an area of 150 mu. | 20XX-8-2 10:00 | Factual questions and answers |
| When was Zhang Zhongjing born? | Zhang Zhongjing was born in 150 AD. | 20XX-8-2 10:01 | Factual questions and answers |
| Animals are lining up. There are 4 animals in front of the kitten and 6 animals behind the pig. The kitten is in front of the pig, and they are next to each other. How many animals are in line? | There are 4 animals in front of the kitten, that is, 4+1=5 animals including the kitten, and there are 6 animals behind the pig, that is, 6+1=7 animals including the pig, so that there are a total of 5+7=12 animals in line. | 20XX-8-2 10:02 | Mathematical reasoning questions |

According to some embodiments, the first intermediate inquiry may be based on the input data. The first intermediate inquiry may be consistent with the input data of the user, may alternatively include the input data of the user and context information, and may alternatively be obtained by rewriting, by the deep learning model, the initial input that is determined based on the input data. The context information may include a plurality of rounds dialogues that have occurred between the user and the intelligent system before the obtained input data of the user.

According to some embodiments, the first intermediate result may be a historical reply item corresponding to a historical input data item that is in the first data group set and whose similarity with the input data is higher than a first threshold. Therefore, the historical reply item related to the current user input is obtained from the external memory bank to obtain the first intermediate result, such that the deep learning model can generate a reply to the current round of input of the user by referring to historical dialogues between the user and the intelligent system, so as to improve the quality of the reply finally outputted by the intelligent system.

In some embodiments, the first intermediate result may alternatively include the historical input data item whose similarity with the input data is higher than the first threshold.

In some embodiments, historical dialogue information related to the input data of the user may be obtained by calculating a similarity between dense vectors. The similarity between dense vectors may be expressed as:

$$s = sim(cont(e_q, e_c), cont\left(e_{m_q}, e_{m_r}\right))$$

where $e_q, e_c, e_{m_q}, e_{m_r}$ respectively represent dense vectors of the input data $q$ of the user, context information c, and a historical input data item $m_q$ and a historical reply item $m_r$ that are in the external memory bank, and may be obtained by using a trained embedding model; *cont* represents a combination of two parts of content, which may be implemented by concatenation, summation, processing by using a neural network (for example, a multilayer perceptron), and the like; and *sim* represents a similarity function.

It can be understood that the above process of calculating the similarity may be implemented by a neural network. A similarity between the input data of the user (or both the input data of the user and context information, or the first intermediate inquiry obtained based on the input data of the user) and each historical input data item (or both a historical input data item and a corresponding historical reply item) in the external memory bank may be calculated, and one or more historical reply items (and optionally, historical input data items) that are in the data group and whose similarities s are greater than a preset first threshold $\delta$ may be returned to the large understanding and generation model. In some embodiments, historical reply items that need to be returned may also be determined based on the similarity by using other methods such as Top K, which is not limited here.

In some embodiments, the external memory bank may be obtained by joint optimization with the large understanding and generation model, as will be described below.

According to some embodiments, the first intermediate inquiry may be based on the input data, and the first intermediate result may be a historical reply item corresponding to a historical input data item that has the latest time stamp in the first data group set and whose similarity with the input data is higher than a first threshold. Therefore, when a plurality of historical reply items related to the input data are obtained, a historical reply item having the latest time stamp is returned, such that the deep learning model generates the reply based on the latest related memory, making full use of timeliness of memory.

In some embodiments, the historical input data item that has the latest time stamp in the first data group set and whose similarity with the input data is higher than the first threshold may also be returned to the deep learning model.

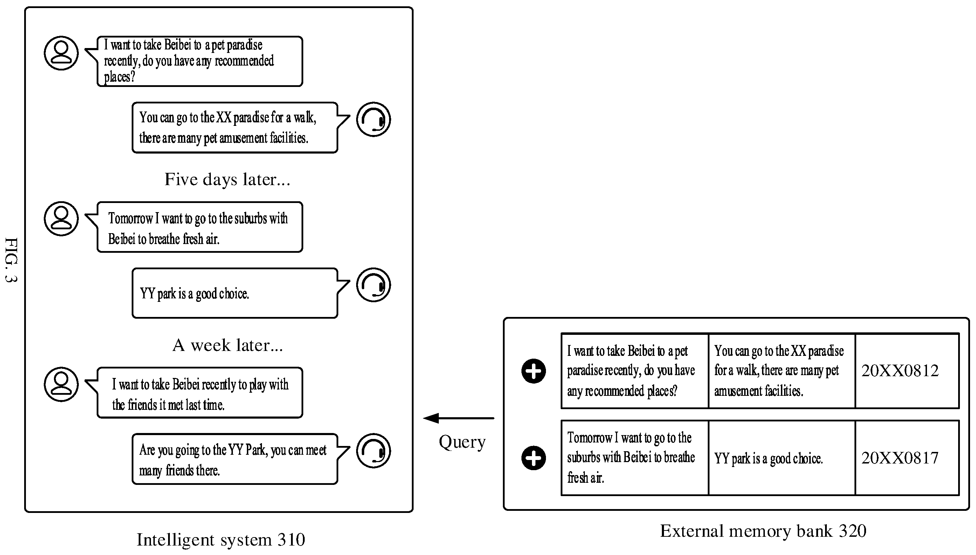

In some embodiments, as shown in FIG. 3, the user and the intelligent system 310 had two dialogues about taking a pet Beibei out to play in history. The intelligent system 310 may be, for example, the system described above that is deployed with the large understanding and generation model and can perform dialogue interaction with the user. In a current dialogue, the intelligent system 310 obtains a user input "I want to take Beibei recently to play with the friends it met last time.", and obtains memory from the external memory bank 320 based on the user input, so as to find a historical input data item "I want to take Beibei to a pet paradise recently, do you have any recommended places?" that has a time stamp of 20XX0812 and a corresponding historical reply item "You can go to the XX paradise for a walk, there are many pet amusement facilities.", and a historical input data item "Tomorrow I want to go to the suburbs with Beibei to breathe fresh air." that has a time stamp of 20XX0817 and a corresponding historical reply item "YY park is a good choice." Furthermore, the historical dialogue that has the latest time stamp may be returned to the deep learning model, and the deep learning model generates a reply "Are you going to the YY Park, you can meet many friends there." based on the historical dialogue. It can be understood that the intelligent system may alternatively provide the two obtained historical dialogues to the model for the model to generate a reply.

Through the above embodiment, it can be seen that, through the use of the external memory bank, historical dialogues generated in previous conversations (for example, a week ago, a month ago, or earlier) between the user and the intelligent system can be recorded, so that the memory capability of the intelligent system is improved, and related historical dialogues can be used as a reference during reply generation for a current input of the user, so as to generate richer and more specific replies that are more targeted for the user, thereby improving the quality of replies, improving the intelligence of dialogues, and enhancing user experience.

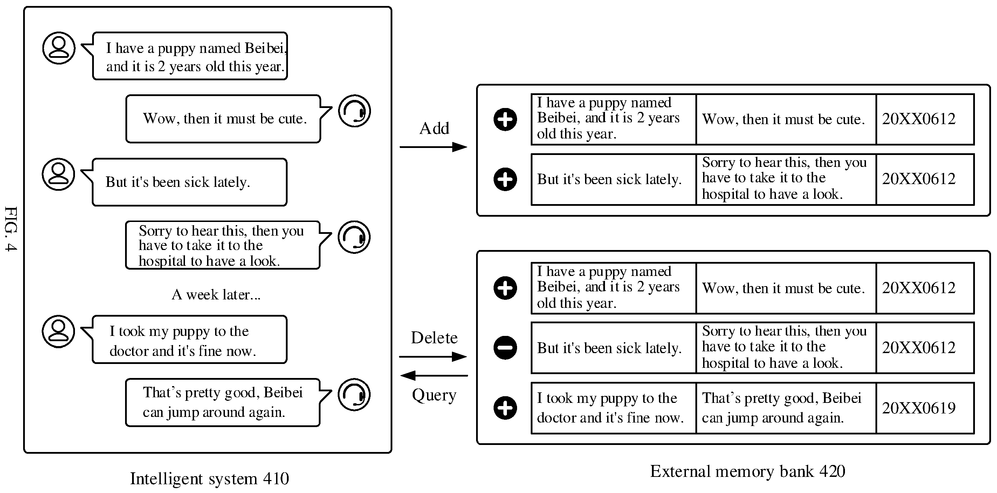

The above embodiment describes query operations for the external memory bank, and addition and deletion operations for data groups in the external memory bank will be described below. FIG. 4 is a schematic diagram of operations such as adding and deleting data groups in an external memory bank 420 according to an exemplary embodiment. The intelligent system 410 may be, for example, the system described above that is deployed with the large understanding and generation model and can perform dialogue interaction with the user. It should be noted that the query operations for the external memory bank are performed during the process of generating reply data for the input data of the user by using the deep learning model, while the operations such as addition and deletion are performed after the deep learning model generates the reply data.

According to some embodiments, the data generation method may further include: in response to determining that a similarity between any data group in the first data group set and a first data group that is based on the input data and the reply is lower than a second threshold, entering the first data group into the first data group set.

In some embodiments, for an $(t-1)^{th}$ round of input data $u_{t-1}$ of the user and reply data $r_{t-1}$ of the deep learning model, if a similarity between a first data group $m_{t-1} =(u_{t-1}, r_{t-1})$ and any data group in the external memory bank $M$ is lower than the preset second threshold, $m_{t-1} =(u_{t-1}, r_{t-1})$ is entered into the external memory bank $m$.

According to some embodiments, the data generation method may further include: in response to determining that a similarity between a second data group in the first data group set and a first data group that is based on the input data and the reply is higher than a third threshold and determining that the first data group conflicts with the second data group, entering the first data group into the first data group set, and deleting the second data group from the first data group set.

In some embodiments, for an $(t-1)^{th}$ round of input data $u_{t-1}$ of the user and reply data $r_{t-1}$ of the deep learning model, if a similarity between a first data group $m_{t-1} =(u_{t-1}, r_{t-1})$ and a second data group $m_{i \in M}$ in the external memory bank M is greater than the third threshold, and it is determined, through consistency determination, that $m_{t-1}$ conflicts with $m_i$, $m_i$ is deleted, and $m_{t-1}$ is entered into $M$. In an exemplary embodiment, consistency determination (for example, conflict detection) of $m_{t-1}$ and $m_i$ may be performed based on semantic vectors of the two by using a neural network, or may be implemented in another manner, which is not limited here.

Therefore, through the above method, addition and deletion of data groups in the external memory bank are implemented, the flexibility of operations for the data groups in the external memory bank is improved, and the timeliness and content accuracy of the data groups in the external memory bank are improved.

In some embodiments, as shown in FIG. 4, after the deep learning model generates a reply to a user input, a current dialogue (including the user input and the reply generated by the model) may be entered into the external memory bank; and when content of the current dialogue conflicts with a historical dialogue in the external memory bank, the historical dialogue may be deleted from the external memory bank.

According to some embodiments, the data generation method may further include: deleting a data group whose timeliness expires from the external memory bank based on the entry time item. In some exemplary embodiments, a retention period for the data groups may be set, and a data group that exceeds the period may be deleted; a timeliness check may be performed based on content of the data groups on a regular or irregular basis, and a data group that fails the check may be deleted; or a data group whose timeliness expires may be deleted from the external memory bank in another manner. Therefore, through the above method, it is ensured that none of the data groups in the external memory bank expires, and the timeliness of memory is improved.

In some embodiments, the intelligent system may directly obtain, from the external memory bank at the stage of constructing the initial input of the deep learning model (that is, before processing the initial input by using the deep learning model), historical dialogue information corresponding to a current round of input data of the user, and determine the initial input of the deep learning model based on the historical dialogue information.

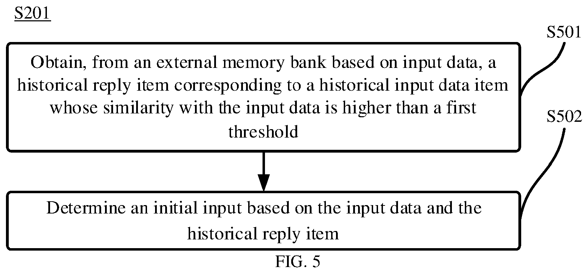

According to some embodiments, as shown in FIG. 5, step S201 of determining an initial input for the deep learning model may include: step S501: obtaining, from the external memory bank based on the input data, a historical reply item corresponding to a historical input data item whose similarity with the input data is higher than a first threshold; and step S502: determining the initial input based on the input data and the historical reply item. It can be understood that, for the operation of step S501, reference may be made to the above description of obtaining the first intermediate result, and details are not repeated here. In this way, it can be ensured that when generating replies each time, the deep learning model can refer to the historical dialogue information obtained from the external memory bank.

In some embodiments, the input data of the user and the historical reply item may be directly concatenated to obtain the initial input of the deep learning model; the input data of the user and the historical reply item may alternatively be processed in another manner to obtain the initial input of the deep learning model, which is not limited here.

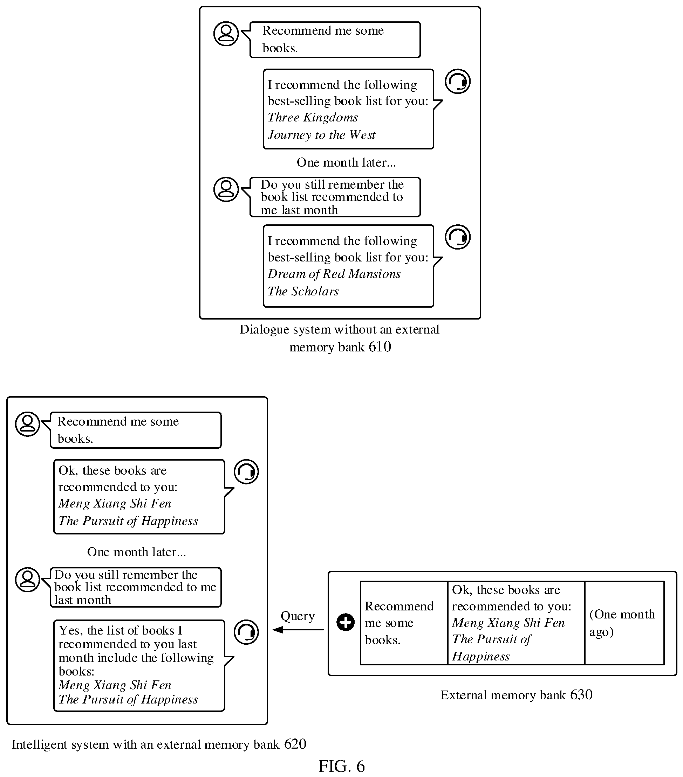

The effects of enhancing the memory capability of the deep learning model and the intelligent system will be further described below in conjunction with some exemplary embodiments. In an exemplary embodiment, as shown in FIG. 6, because a dialogue system 610 without an external memory bank cannot form long-term memory, the system can only mechanically reply when the user asks about content in historical dialogues. The intelligent system 620 having an external memory bank that is described in the present disclosure can obtain corresponding historical dialogues from the external memory bank 630 for a user input, thereby generating a reply that meets requirements of the user, reflecting enhancement of the memory capability of the deep learning model and the intelligent system.

In some embodiments, the first functional component may alternatively be another functional component, such as an external search engine, a retrieval model, or an application programming interface. Each of these different functional components has a corresponding token. In step S202, the deep learning model decides whether to call an external functional component (and/or which functional component to call), and a decision result is reflected in whether a result outputted by the deep learning model includes a corresponding token for calling the external functional component (and/or whether the result includes a corresponding token for calling a specific functional component). It should be noted that these external functional components such as the external search engine, the retrieval model, and the application programming interface do not need to rely on context information and/or an external memory bank. In other words, these external functional components may all be called and used by the deep learning model separately.

In some embodiments, when the deep learning model based on the Transformer network structure performs a prediction, the model first receives the initial input to generate a first output token token_1. Then, the model receives token_1 to generate a second output token token_2. Cyclic calling of the deep learning model is repeated until token_n outputted by the model indicates completion of the output of the model. Each token outputted by the model may correspond to a specific external functional component, to reflect a decision result of whether to call the external functional component; may be in a specific markup form, to generate an intermediate inquiry that can be recognized by a specific external functional component; or may be a specific single character, a character, or a word to generate a reply to the user input; or a special symbol to indicate that current content has been generated. Therefore, automatic decision-making using the model is implemented, to determine a task that needs to be performed next (such as calling an external functional component or generating a reply).

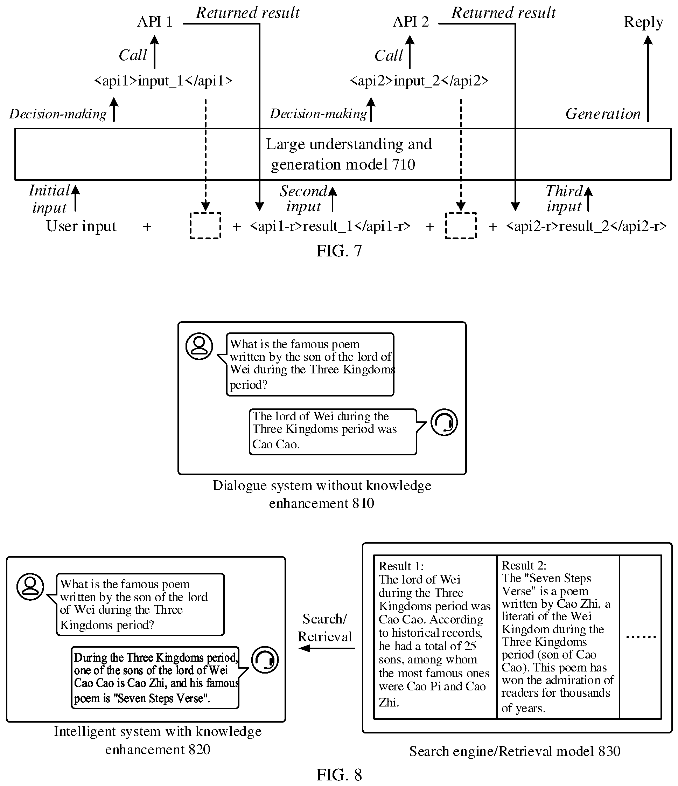

FIG. 7 is a schematic diagram of generating, by a deep learning model, a reply based on an initial input according to an exemplary embodiment. A structure of a large understanding and generation model 710 (that is, the deep learning model) may be UniLM. First, the initial input of the model that is based on the input data of the user (and optionally, the context information) is inputted into the deep learning model to obtain a first token outputted by the model, and corresponding content of the token is <api1>. This token reflects a decision of the model to call a functional component API 1. The model may continue to output to generate a first intermediate inquiry input_1 that can be recognized by API 1. This process may also be understood as rewriting the input data of the user, to obtain call information that can be recognized by API 1 and obtain an expected result from API 1. After outputting input_1, the model may output a token corresponding to a markup </api1>, indicating that the first intermediate inquiry for API 1 has been generated. A first output may include <api1>input_1</api1> as a whole.

In some embodiments, the first intermediate inquiry input_1 corresponding to API 1 may be generated word by word by cyclically calling the deep learning model, that is, the input data of the user and a part generated in input_1 are inputted into the model each time to obtain a next single character, character, or markup in input_1. The input_1 may alternatively be obtained by decoding a single token outputted by the deep learning model. The input_1 may alternatively be obtained in another manner based on the token outputted by the model, which is not limited here.

After the first intermediate inquiry input_1 is obtained, API 1 may be called by using input_1, to obtain a first intermediate result <api1-r>result_1</api1-r>. Furthermore, the input data of the user and the first intermediate result may be combined to obtain a second input for the deep learning model, so as to obtain a next token to be outputted by the model. In some embodiments, when the second input is determined, the first intermediate inquiry (or the complete first output) may also be incorporated, as shown by the dashed arrow pointing downward from the first output <api1>input_1</api1> and the dashed box on the left of the first intermediate result <api1-r>result_1</api1-r> in FIG. 7. The dotted box may be the first intermediate inquiry input_1, or the complete first output <api1>input_1</api1>. In an exemplary embodiment, the second input is a concatenation of the initial input of the model, the first output, and the first intermediate result.

According to some embodiments, step S204 of determining a second input for the deep learning model based at least on the initial input and the first intermediate result may include: determining the second input for the deep learning model based on the initial input, the first intermediate result, and the first intermediate inquiry. Therefore, through the use of the first intermediate inquiry as a reference factor for the deep learning model to generate the second output, the accuracy of the model for decision-making can be further improved, and the quality of the finally generated reply can be improved.

Content corresponding to a second token generated by the deep learning model based on the second input is <api2>, and this token reflects a decision of the model to call a functional component API 2. The model may continue to output a second intermediate inquiry input_2 and a token corresponding to a markup </api2>. Furthermore, API 2 may be called by using input_2, to obtain a second intermediate result <api2-r>result_2</api2-r>, and the input data of the user and the second intermediate result (and optionally, the second intermediate inquiry) may be combined to obtain a third input for the deep learning model. In an exemplary embodiment, the third input is a concatenation of the initial input of the model, the first output, the first intermediate result, the second output, and the second intermediate result.

A third token generated by the deep learning model based on the third input may not correspond to any external functional component, so that the third token can instruct the model to start to generate the reply to the initial input of the model (may also be understood as the reply to the input data of the user). In some embodiments, the third token may be a first single character, character, or word in the reply, or may be a special symbol that does not have semantic information and is used to instruct the model to start to generate a reply from a next token. The model will then generate the reply word by word, and finally generate a special symbol indicating that the reply has been generated.

It should be noted that the different external functional components are independent of each other when being called, and there is no preset sequence relationship. Instead, a token outputted by the model decides which external functional component needs to be called. Therefore, in some exemplary embodiments, the model may decide to call the same functional component a plurality of times, or call a plurality of functional components in a specific logical order based on understanding of the user input, so as to perform a specific task.

Therefore, the large understanding and generation model is enabled to output tokens that have different meanings, such that the model can automatically determine, based on the understanding of the user input (and optionally, the context information), a task that needs to be performed (for example, calling a specific external functional component or directly generating a reply) and an execution order, thereby implementing the use of a single deep learning model for automatic understanding, reasoning, decision-making, and generation, and improving the intelligence of the system.

In some embodiments, the UniLM model has only one input. Therefore, in step S204, the initial input and the first intermediate result may be combined by concatenation or other methods, to obtain the second input of the deep learning model for the user.

In some embodiments, for the used N-layer Transformer network structure having an encoder and a decoder, an input of the encoder may be the initial input of the model, and an output of the encoder may be an encoding result of the initial input. Two inputs of the decoder are respectively the encoding result of the initial input that is outputted by the encoder and all tokens generated by the model, and an output of the decoder is a predicted next token. Therefore, in step S204, the first intermediate result and the encoding result of the initial input may be respectively used as the two inputs of the decoder.

According to some embodiments, the first functional component may be an external search engine. The external search engine may be a general search engine, a field specific knowledge engine or professional knowledge base, or a privatized database, so as to obtain different types of knowledge and update knowledge in real time.

The first intermediate inquiry generated by the deep learning model may be, for example, a search expression, so that a search may be performed on the external search engine based on the search expression, to obtain one or more search results. In some embodiments, one or more search results returned by the search engine may be directly used as the first intermediate result, or these search results may be processed to obtain the first intermediate result. Then, the second input for being processed by the deep learning model may be determined based on the initial input of the deep learning model (for example, the input data of the user, and optionally, the context information) and the first intermediate result (for example, the one or more search results). For the second input, the deep learning model may determine to further call a second functional component, or may determine to no longer call other functional components and directly generate a reply to the initial input, as will be described below.

In some embodiments, the initial input and the first intermediate result may be combined by concatenation or other methods, to obtain the second input. Each search result may be first processed by content extraction, rewriting, semantic vector calculation, or other methods, and then the initial input and the processed search result may be combined by concatenation or other methods, so as to obtain the second input, which is not limited here.

In some embodiments, data may be fully internalized into the model in a parameterized manner by training, and a reply to a user input may be directly generated by using such a model. Under this mechanism, due to a low occurrence frequency of relatively unpopular factual information in training data, the model may be insufficient in learning of it, which may lead to situations of "forgetting" or "memory confusion".

Therefore, the search results are obtained from the external search engine, such that various types of precise knowledge, information, and timeliness data can be accurately delivered to the upper-layer large understanding and generation model in a timely manner, allowing the large understanding and generation model to meet and reply to requirements of the user based on searched explicit information and the internalized knowledge in the model. In addition, the large understanding and generation model generates a final reply based on the one or more search results included in the second input, which implements integration and processing of searched information, so that the reply that is more in line with the intention of the user can be outputted, thereby improving the quality of the reply data.

According to some embodiments, the first functional component is a retrieval model obtained by joint training with the deep learning model. The retrieval model may be a large end-to-end model based on the Transformer structure, which may further include a recall model and a ranking model. The retrieval model may alternatively be implemented by a single neural network model (for example, a large end-to-end model based on the Transformer structure). The joint training of the deep learning model and the retrieval model will be described below.

The first intermediate inquiry generated by the deep learning model may be, for example, a retrieval query, so that a retrieval may be performed by using the retrieval model that is obtained by joint training with the deep learning model, so as to obtain one or more retrieval results. It can be understood that, for the processing of the retrieval results, reference may be made to the processing of the search results returned by the search engine described above, and details are not repeated here.

Therefore, through the use of the external retrieval model, the above advantages of using the external search engine can be achieved, and since the external retrieval model and the large understanding and generation model are jointly optimized and the two can cooperate with each other, the external retrieval model can provide content that is more accurate and more suitable for reply generation to the large understanding and generation model, and the large understanding and generation model can better integrate and process the retrieval results, thereby generating a reply that is more in line with the intention of the user and has higher quality. Therefore, through the use of the external search engine or the external retrieval model, knowledge enhancement for the deep learning model and the intelligent system can be implemented.

The effects of knowledge enhancement for the deep learning model and the intelligent system will be further described below in conjunction with some exemplary embodiments. In an exemplary embodiment, as shown in FIG. 8, internalized knowledge in a dialogue system 810 without knowledge enhancement is limited, and the system cannot provide accurate answers when faced with knowledge-intensive questions. In addition, because the dialogue system 810 cannot update the knowledge in real time, its output results may be outdated or wrong. The intelligent system 820 with knowledge enhancement described in the present disclosure can perform a retrieval in an external search engine/retrieval model 830 for a user input, thereby obtaining accurate knowledge content and improving the accuracy of the knowledge. For the question "What is the famous poem written by the son of the lord of Wei during the Three Kingdoms period?" raised by the user, the search engine/retrieval model 830 returns two related results, one of which explains that the lord of Wei during the Three Kingdoms period was Cao Cao, who had sons Cao Pi and Cao Zhi, and the other explains that the Cao Zhi's poem "Seven Steps Verse" was very famous. The deep learning model gives an accurate reply by fusing the two externally obtained search results in conjunction with its own internalized knowledge.

In addition, since databases, knowledge bases, and resource bases behind the external search engine and retrieval model are updated in real time, the knowledge obtained by searching or retrieving has stronger timeliness. Therefore, knowledge enhancement for the deep learning model and the intelligent system is reflected.

According to some embodiments, the first functional component is at least one application programming interface (API) that can be called by the deep learning model. Each of different APIs has a corresponding markup form, that is, a token for calling the API. During a prediction performed by the deep learning model, when the model outputs a token/markup corresponding to a specific API, the intelligent system knows that the API needs to be triggered. Then, the model will continue to output an intermediate inquiry (that is, an input for the API, which may also be referred to as a rewritten query) that can be recognized by the API. Then, a second input to be further inputted into the deep learning model may be determined based on an intermediate result that is obtained by calling the API using the intermediate inquiry, such that the model continues to perform a prediction. For the second input, a decision of the deep learning model may be to further call a second functional component (search engine, retrieval model, or another API), or no longer call another functional component and directly generate a reply to the initial input.

As described above, in the process of generating a single-round reply by the model, all APIs (or all external functional modules) may be called, or only some APIs may be called, and a calling order and a calling number of times of these APIs are also decided by the model.

In some embodiments, the APIs used in the intelligent system may include scientific calculators, spreadsheet tools, smart home control, and the like. Therefore, the capability of the intelligent system is expanded by calling APIs that can perform various tasks. Through the use of external functional components such as scientific calculators, the problem of a weak logical calculation capability of the deep learning model is solved, and the overall logical reasoning capability of the intelligent system is improved. Compared to a method of calling an API using a mapping table of keywords and API call instructions, the deep learning model is directly used to generate an intermediate inquiry that can be recognized by the API, such that the intermediate inquiry and an obtained intermediate result are more in line with the potential intention in the initial input of the user, improving the quality of the finally generated reply and enhancing the intelligence of the system. In addition, through a combination of the large understanding and generation model and the APIs, the intelligent system is enabled to have an automatic work execution capability, implementing capability expansion of the deep learning model and the intelligent system.

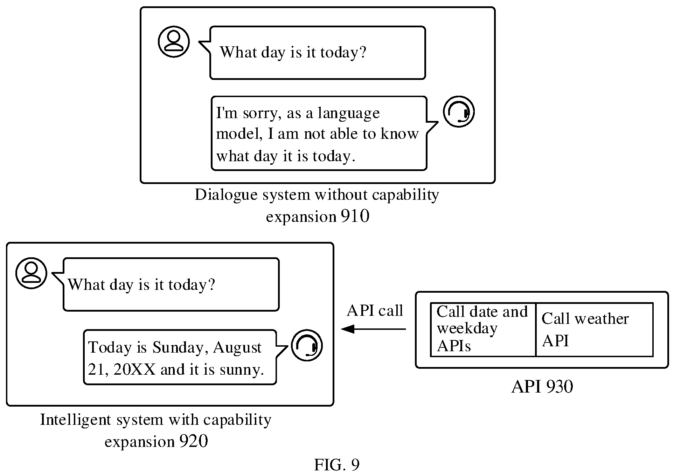

The effects of expanding the capability of the deep learning model and the intelligent system will be further described below in conjunction with some exemplary embodiments. In an exemplary embodiment, as shown in FIG. 9, a dialogue system 910 without capability expansion (for example, a capability to call external APIs) can perform limited tasks, and cannot handle tasks such as weather query, mathematical calculations, and the like that can only be completed by require calling external functional components to be completed. An intelligent system 920 with capability expansion described in the present disclosure can determine an API 930 that needs to be called for a user input, and then generate, by calling the API 930 and processing a returned result, a reply that meets requirements of the user, reflecting capability expansion of the deep learning model and the intelligent system.

According to some embodiments, the second output may include a second token for calling a second functional component and a second intermediate inquiry that is obtained based on the second input and recognizable by the second functional component. It can be understood that the second functional component may be the same as the first functional component (that is, the same functional component is called a plurality of times), or may be different from the first functional component, which is not limited here.

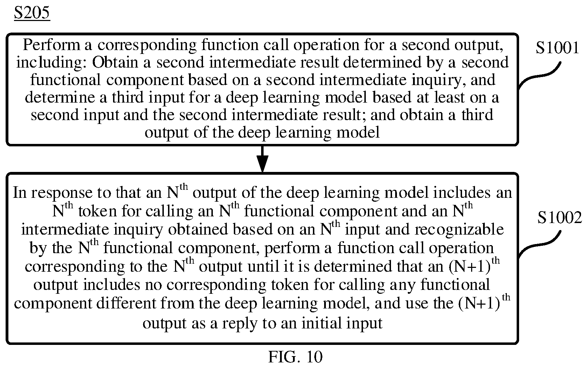

According to some embodiments, as shown in FIG. 10, step S205 of obtaining a second output of the deep learning model for generating the reply to the initial input may include: step S1001: performing a corresponding function call operation for the second output, including: obtaining a second intermediate result determined by the second functional component based on the second intermediate inquiry; determining a third input for the deep learning model based at least on the second input and the second intermediate result; and obtaining a third output of the deep learning model; and step S1002: in response to that an $N^{th}$ output of the deep learning model includes an $N^{th}$ token for calling an $N^{th}$ functional component and an $N^{th}$ intermediate inquiry obtained based on an $N^{th}$ input and recognizable by the $N^{th}$ functional component, performing a function call operation corresponding to the $N^{th}$ output until it is determined that an $(N+1)^{th}$ output includes no corresponding token for calling any functional component different from the deep learning model, and using the $(N+1)^{th}$ output as the reply to the initial input, where N is an integer greater than 2.

Therefore, through the above method, the deep learning model can call external functional components a plurality of times until the model determines that there is no longer a need to call any external functional component.

According to some embodiments, each of the second functional component and the $N^{th}$ functional component may be one in a functional component group including the following: an external search engine; a retrieval model obtained by joint training with the deep learning model; at least one application programming interface callable by the deep learning model; and an external memory bank, where the external memory bank stores a first data group set related to the user, and where each data group in the first data group set includes at least a historical input data item and a historical reply item generated by the deep learning model for the historical input data item.

According to some embodiments, the second output may include no corresponding token for calling any functional component different from the deep learning model. Step S205 of obtaining a second output of the deep learning model for generating the reply to the initial input may include: using the second output as the reply to the initial input. Therefore, when the second output generated by the model includes no token corresponding to any functional component, the final reply to the initial input that is outputted by the model can be obtained.

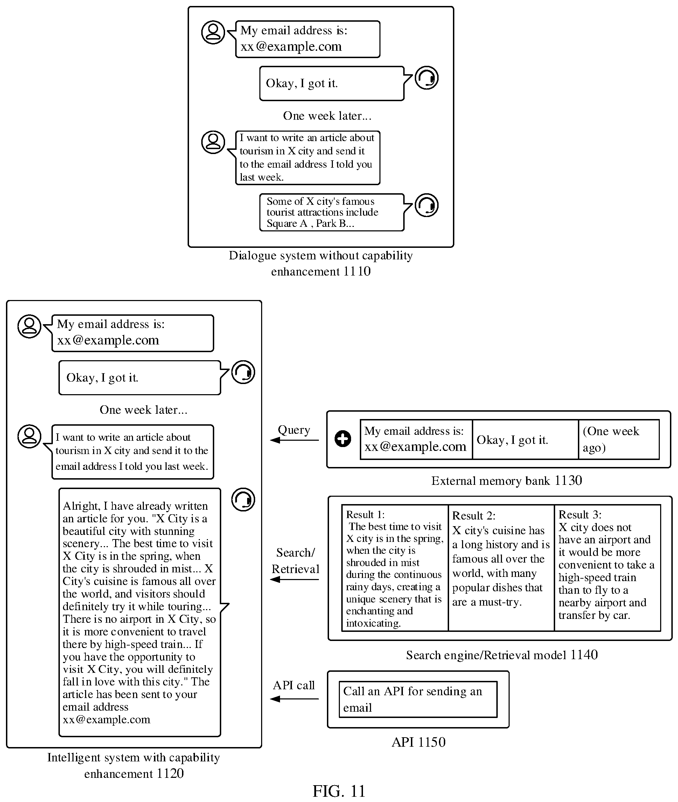

The effects of enhancing a plurality of capabilities of the deep learning model and the intelligent system will be further described below in conjunction with some exemplary embodiments. In an exemplary embodiment, as shown in FIG. 11, a dialogue system 1110 without capability enhancement generates simple reply content based on internalized knowledge in the model and cannot complete a task described in a user input, thus failing to meet requirements of the user. The intelligent system 1120 with capability enhancement described in the present disclosure can accurately understand the intention reflected in the user input, and further use external components such as an external memory bank 1130, a search engine/retrieval model 1140, an API 1150, and the like to accurately complete a plurality of tasks such as historical memory query, article generation, calling the API to send an email, and the like, and can perform the tasks with correct logic.

In addition, when generating an article, the model can use the external search engine/retrieval model to obtain explicit information as article materials, and can use internalized knowledge to perform selection, integration, and polishing on these obtained materials, and generate opening, ending, and transition paragraphs to combine them into a complete article. As shown in FIG. 11, in an article generated by the intelligent system 1120, the two paragraphs "X city is a beautiful city." and "If you have the opportunity to travel to X city, you will love this city." may be content generated based on internalized knowledge in the model, while the three paragraphs in the middle about the tourist season, local food, and means of transportation are respectively from three retrieval results, and are generated by polishing and modifying the retrieval results. Therefore, through the above method, high-quality reply content can be generated.

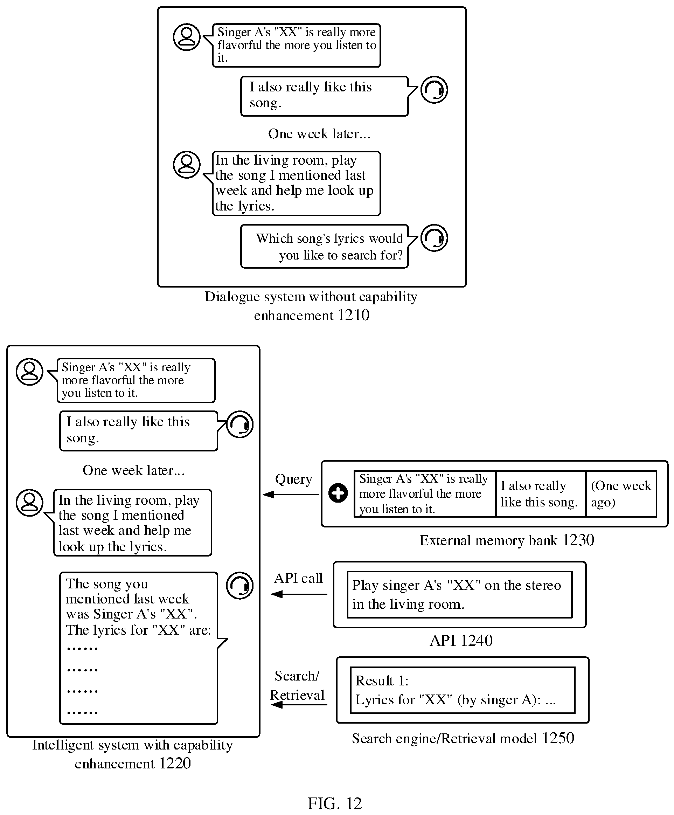

In an exemplary embodiment, as shown in FIG. 12, a dialogue system 1210 without capability enhancement cannot obtain historical dialogues with the user, and therefore cannot complete a task described in a user input, thus failing to meet requirements of the user. In comparison, the intelligent system 1220 with capability enhancement described in the present disclosure can accurately understand the intention reflected in the user input, and further use external components such as an external memory bank 1230, an API 1240, a search engine/retrieval model 1250, and the like to accurately complete a plurality of tasks such as historical memory query, calling the API to play music, looking up the lyrics, and the like, and can perform the tasks with correct logic. Therefore, enhancement of a plurality of capabilities of the deep learning model and the intelligent system is reflected.

According to some embodiments, the initial input in step S201 may include context information of the input data. The context information may include a plurality of rounds dialogues that have occurred between the user and the intelligent system before the obtained input data of the user.

In some embodiments, the context information includes a plurality of rounds of dialogues between the user and the intelligent system in a current conversation between the user and the intelligent system, but does not include dialogues sent in historical conversations between the user and the intelligent system. In other words, when the user closes an application or service of the intelligent system, the context information will be cleared accordingly; and when the user restarts the application or service of the intelligent system, the context information will starts to be recorded again.

In addition, limited by an upper limit of an input length of the deep learning model, the context information generally has a preset maximum encodable length and a limited memory capability. Therefore, after the user has conducted a plurality of rounds or long conversations with the intelligent system, part of content in the context information may be discarded.

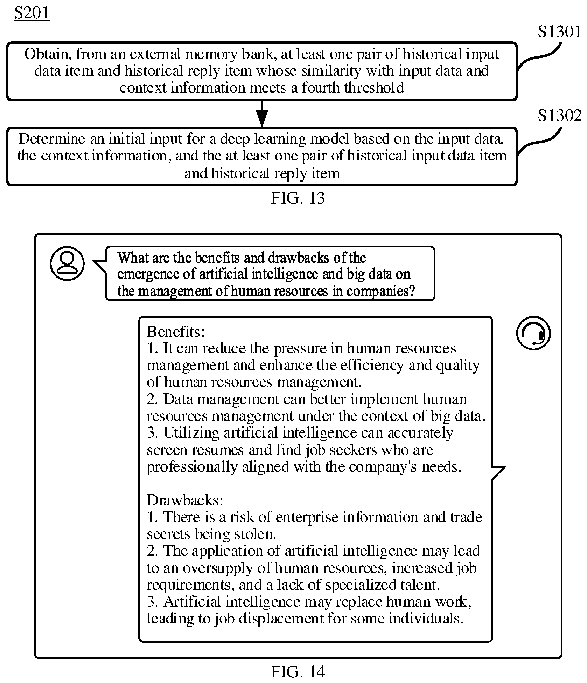

According to some embodiments, when historical dialogue information is obtained from the external memory bank, on a basis of the input data of the user, the context information may also be used as a reference. In addition, corresponding historical input data items may be obtained in addition to obtaining historical reply items. As shown in FIG. 13, step S201 of determining an initial input for the deep learning model may include: step S1301: obtaining, from an external memory bank, at least one pair of historical input data item and historical reply item whose similarity with the input data and the context information meets a fourth threshold; and step S1302: determining the initial input for the deep learning model based on the input data, the context information, and the at least one pair of historical input data item and historical reply item. Therefore, through the use of both the input data of the user and the context information for performing similarity calculations, more effective historical dialogue information can be obtained from the external memory bank; and through the use of the input data, the context information, and the corresponding at least one pair of historical input data item and historical reply item, the quality of the reply generated by the deep learning model can be further improved.

In some embodiments, for other external functional components, both the input data of the user and the context information may also be used as references when generating the corresponding first intermediate inquiry.

It can be understood that, when the method in the present disclosure is implemented, values of the first threshold, the second threshold, the third threshold, and the fourth threshold may be set according to requirements. The values of these preset thresholds may be the same or different. This is not limited here.

The intelligent system and the large understanding and generation model deployed on it can present the generated replies in rich forms and can interact with the user to improve the user experience.

In some embodiments, the dialogue system generates the final reply based on a single search result, which may result in incomplete or incorrect answers. As shown in FIG. 14, the intelligent system of the present disclosure performs online calculations after searching or retrieving, so that the method of aggregated presentation of answers (aggregation of a single answer or a plurality of answers can be implemented) can be implemented.

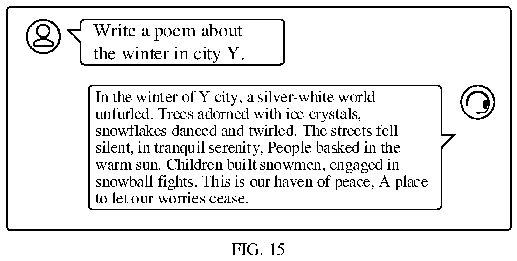

In some embodiments, as shown in FIG. 15, in addition to displaying retrieved content in an aggregated manner, the intelligent system can also generate answers by itself, such as writing poems, novels, emails, summing up reports, writing compositions, writing marketing documents, and the like, and can also perform subject-related mathematical reasoning and common sense reasoning. The intelligent system can present these results in a structured manner.

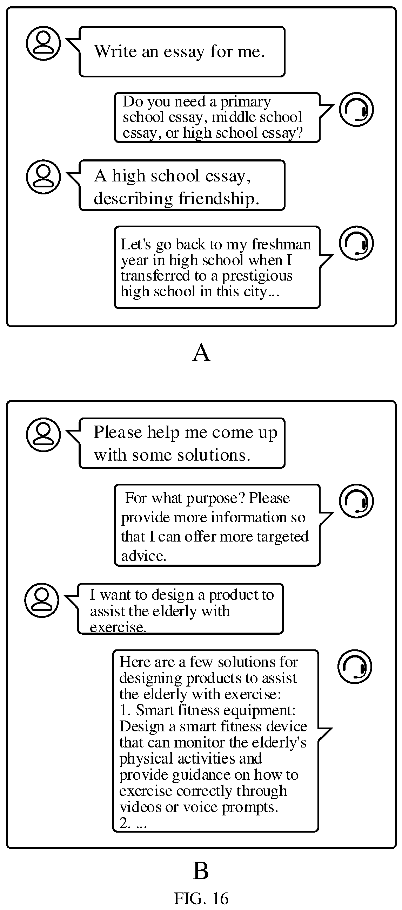

In some embodiments, the intelligent system may interact with the user through a plurality of rounds of clarification, active guidance, in-depth topic question answering, and execution of a specific command, thereby implementing interactive presentation. In some exemplary embodiments, as shown in part A of FIG. 16, the intelligent system can proactively clarify the subject and content of the dialogue to the user, so as to generate content that is more in line with expectations of the user. As shown in Part B of FIG. 16, the intelligent system can proactively guide the user, thereby digging out specific requirements of the user.

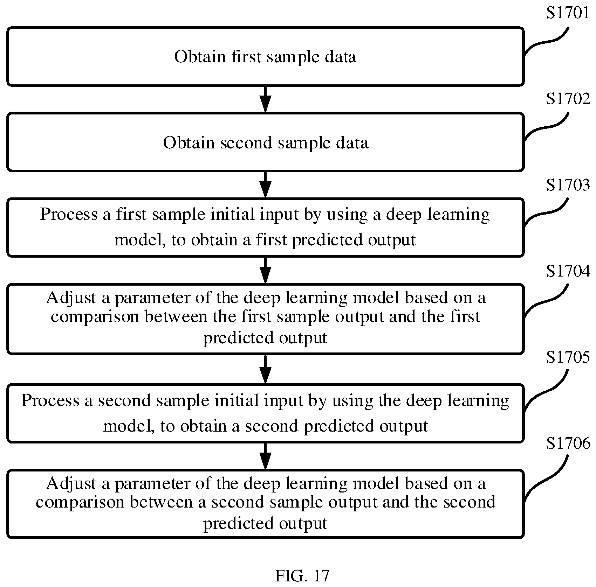

According to another aspect of the present disclosure, there is provided a training method for a deep learning model. The deep learning model is used to generate reply data based on input data of a user. As shown in FIG. 17, the training method includes: step S1701: obtaining first sample data, the first sample data including a first sample initial input and a first sample output, where the first sample initial input includes an expression of intention of calling a first preset functional component different from the deep learning model, and where the first sample output includes a first token for calling the first preset functional component and a first sample intermediate input recognizable by the first preset functional component; step S1702: obtaining second sample data, the second sample data including a second sample initial input and a second sample output, where the second sample initial input includes no expression of intention of calling any preset functional component different from the deep learning model, and where the second sample output includes no corresponding token for calling any preset functional component; step S1703: processing the first sample initial input by using the deep learning model, to obtain a first predicted output; step S1704: adjusting a parameter of the deep learning model based on a comparison between the first sample output and the first predicted output; step S1705: processing the second sample initial input by using the deep learning model, to obtain a second predicted output; and step S1706: adjusting a parameter of the deep learning model based on a comparison between the second sample output and the second predicted output.

Therefore, the deep learning model is trained by using the above method, such that the trained deep learning model can output, when there is a need to call a specific preset functional component, a token corresponding to the preset functional component and an intermediate input recognizable by the preset functional component, and can generate, when there is no need to call any functional component, output content that includes no token corresponding to any preset functional component and intermediate input, so that the model is enabled to have the capability to perform tasks such as understanding, decision-making, and generation, and the capabilities of the deep learning model can be enhanced by using the external functional component, thereby improving the quality of the generated reply data.

In some embodiments, before step S1701, the large understanding and generation model may be first trained using both language text and priori knowledge.

The large understanding and generation model may be trained using a large amount of text data (for example, Internet data), knowledge graphs, and weakly supervised data. In addition, it is also particularly important to add human-summarized knowledge to the model. The priori knowledge summarized by humans can help the model to better understand language, generate language, and make decisions, such that the model can interact with humans efficiently and smoothly. Specific steps are as follows.

(1) Text data on the Internet are collected, and subjected to low-quality data removal and de-noising, so as to remove invalid and redundant information from big data.
(2) Prior knowledge fusion mainly includes three types of knowledge:

A. Massive knowledge graphs constructed based on the Internet: including <entity-attribute-attribute value> or <entity-relationship-entity2>, such as <star A-height-172> and <star A-couple-star B>;
B. High-quality manual priori manually annotated data: various tasks are manually annotated, for example, data is annotated according to classification: "XX was elected as the new chairman of the men's basketball team." is annotated as <"XX was elected as the new chairman of the men's basketball team"-"sports">; or question-and-answer data: <"Will eating chocolate for a long time cause diabetes?"-"No">;
C. Industry knowledge such as dictionaries of medical, safety, transportation, finance, energy, and other industries, and industry structured knowledge;

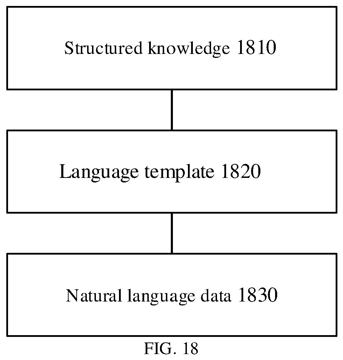

(3) As shown in FIG. 18, in the knowledge fusion technology, the above three types of structured knowledge 1810 are converted into natural language descriptions (that is, natural language data 1830) through a language template 1820, and then mixed with Internet text data for learning. In an exemplary embodiment, the structured knowledge <star A-couple-star B> may be converted into natural language data such as "Star A's wife is Star B." through the language template. Through the method of mixed learning, the model can better understand natural language and have basic dialogue and interaction capabilities.

In some embodiments, for the first sample data obtained in step S1701 and the second sample data obtained in step S1702, the first sample initial input and the second sample initial input may be real user data or constructed data, and may include the input data (and optionally, the context information). The first sample initial input includes the expression of intention of calling the first preset functional component that is different from the deep learning model, that is, the content described by the first sample initial input requires or expects the model to call the first preset functional component. The second sample initial input includes no expression of intention of calling any preset functional component that is different from the deep learning model, that is, the content described by the second sample initial input does not require or expect the model to call any preset functional component. The first sample output and the second sample output may be results expect to be outputted by the deep learning model, that is, ground truth.

In some embodiments, the first token included in the first sample output corresponds to the corresponding first preset functional component, so that the trained deep learning model can use the token to indicate that the first preset functional component needs to be called. In some embodiments, the first token outputted by the model may be encoded as a markup form corresponding to the first preset functional component, and an API call result may be converted into a string, such that the trained model can make decisions, call information generation, and call result understanding in a text processing manner.

In some embodiments, the first sample intermediate input included in the first sample output may be processed by the external first preset functional component, to obtain a result returned by the first preset functional component. When the first preset functional component is an external memory bank, the first sample intermediate input may be input data of the user (and optionally, context information) that can be used for similarity calculation by the external memory bank. When the first preset functional component is a search engine, the first sample intermediate input may be a search expression that can be recognized by the search engine. When the first preset functional component is a retrieval model, the first sample intermediate input may be a retrieval query that can be processed by the retrieval model. When the first preset functional component is a specific API, the first sample intermediate input may be encoded as a markup form corresponding to the API. Through the above method, the trained model can have the capability to output an intermediate input that can be recognized by these preset functional components.

In some embodiments, the first predicted output outputted by the deep learning model and obtained in step S1703 may be close to or completely different from the first sample output, but the objective of training the deep learning model is to make the first predicted output generated by the trained model include the token for calling the first preset functional component and a predicted intermediate input that can be recognized by the first preset functional component and has a function or meaning consistent with that of the first sample intermediate input.

In some embodiments, the second sample output includes no corresponding token for calling any preset functional component, so that the second sample output should be the reply of the deep learning model to the second sample initial input. The second predicted output outputted by the deep learning model and obtained in step S1705 may be close to or completely different from the second sample output, but the objective of training the deep learning model is to make the second predicted output generated by the trained model include no token for calling any preset functional component and include high-quality reply data for the second sample initial input.

In some embodiments, in steps S1704 and S1706, corresponding loss functions may be determined according to requirements, a loss value describing a difference between the sample output and the predicted output may be calculated, and then the parameter of the deep learning model may be adjusted based on the loss value.

In some embodiments, the first sample data may further include a first sample target input and a first sample reply. The first sample target input includes the first sample initial input and a first sample intermediate result obtained from the first preset functional component based on the first sample intermediate input. In some embodiments, the first sample target input may further include the first sample intermediate input. The first sample reply is a ground truth reply for the first sample initial input constructed using the first sample intermediate result. The training method may further include: processing the first sample target input by using the deep learning model, to obtain a first predicted reply; and adjusting a parameter of the deep learning model based on a comparison between the first sample reply and the first predicted reply.

Therefore, through the above method, the trained deep learning model can combine the result obtained from the external functional component and the internalized knowledge in the model to satisfy and reply to requirements of the user, and finally obtain high-quality reply content.

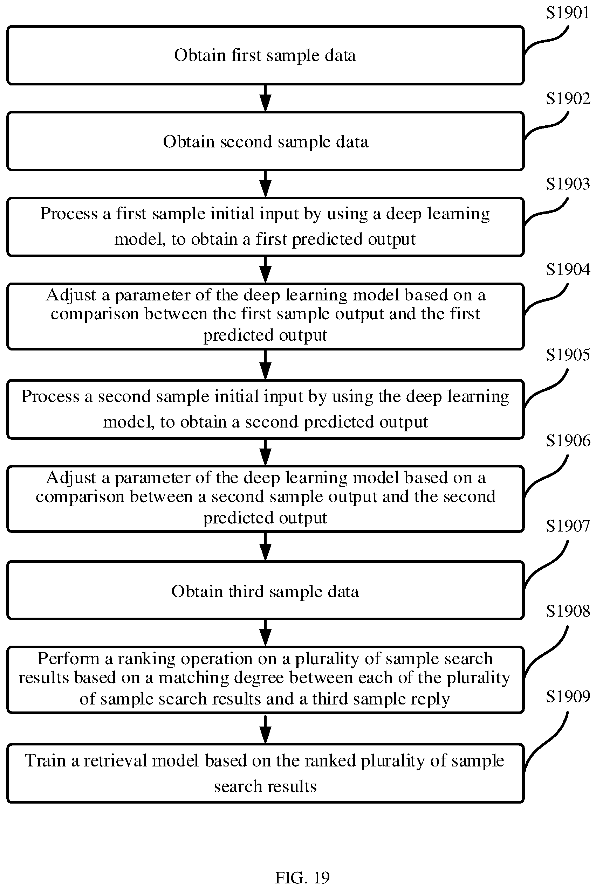

According to some embodiments, as shown in FIG. 19, the training method may further include: step S1907: obtaining third sample data, the third sample data including a third sample initial input, a sample search inquiry, a plurality of sample search results, and a third sample reply of the deep learning model for the third sample initial input, where the sample search inquiry is a sample intermediate input generated by the deep learning model based on the third sample initial input, and the sample intermediate input is recognizable by a retrieval model different from the deep learning model, and where the plurality of sample search results are results outputted by the retrieval model based on the sample search inquiry; step S1908: performing a ranking operation on the plurality of sample search results based on a matching degree between each of the plurality of sample search results and the third sample reply; and step S1909: training the retrieval model based on the ranked plurality of sample search results. It can be understood that, operations of steps S1901 to S1906 in FIG. 19 are respectively similar to operations of steps S1701 to S 1706 in FIG. 17. Details are not described here again.

Therefore, through the determination of the ranking result of the plurality of sample search results in the third sample data, the ranking result is used as supervision to train the retrieval model, which implements joint optimization of the large understanding and generation model and the retrieval model, such that the two can cooperate with each other, and the external retrieval model can provide content that is more accurate and more suitable for reply generation to the large understanding and generation model, thereby enabling the large understanding and generation model to generate replies that are more in line with the intention of the user and have higher quality.

In some embodiments, the sample search inquiry included in the third sample data may be, for example, a retrieval query, the plurality of sample search results may be, for example, a plurality of pieces contents that are from a retrieval database used by the retrieval model, meet requirements of the third sample initial input, and are used to generate, by integration, the third sample reply for the third sample initial input, while the third sample reply may be content obtained after performing selection, modification, polishing, and other steps by manually referring to the plurality of sample search results. In some embodiments, reference may be made to the method of step S 1701, step S 1703, and S 1704 in FIG. 17 to use the third sample data to train the deep learning model, such that the deep learning model has the capability to automatically perform the above steps such as selection, modification, and polishing.

In some embodiments, in step S1908, a content matching degree between each of the plurality of sample search results and the third sample reply may be calculated, for example, similarity calculation may be performed based on semantic vectors.

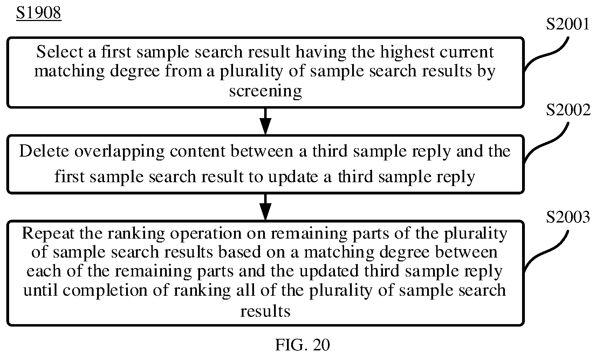

According to some embodiments, as shown in FIG. 20, step S1908 of performing a ranking operation on the plurality of sample search results based on a matching degree between each of the plurality of sample search results and the third sample reply may include: step S2001: selecting a first sample search result having the highest current matching degree from the plurality of sample search results; step S2002: deleting overlapping content between the third sample reply and the first sample search result to update the third sample reply; and step S2003: repeating the ranking operation on remaining parts of the plurality of sample search results based on a matching degree between each of the remaining parts and the updated third sample reply until completion of ranking all of the plurality of sample search results.

Therefore, through the above method, the plurality of sample search results for generating the third sample reply are ranked, so that joint optimization of the large understanding and generation model and the retrieval model can be implemented.

According to some embodiments, the retrieval model may include a ranking sub-model and a recall sub-model. Step S1909 of training the retrieval model based on the ranked plurality of sample search results may include: training the ranking sub-model of the retrieval model based on the ranked plurality of sample search results; and using the trained ranking sub-model as a teacher model to train the recall sub-model. Therefore, through the above method, joint optimization of the large understanding and generation model, and the ranking sub-model and the recall sub-model in the retrieval model is implemented.

In some embodiments, the ranking sub-model is a fine-grained ranking model (Cross-Encoder) for end-to-end search. An input of the fine-grained ranking model includes a query (q) and a passage (p), and an output of the model is a similarity $sim(q,p)$ between the two. A listwise loss may be used as supervision, such that a ranking result outputted by the fine-grained ranking model is close to or consistent with a ranking result generated for the plurality of sample search results.

In some embodiments, the recall sub-model may be a dual-tower model (Bi-Encoder), where one tower is used to generate a feature vector for the query q, and the other tower is used to generate a feature vector for the passage p. A similarity between these two feature vectors may be calculated based on the two vectors. After the ranking model is trained, a training sample is constructed for the recall model by using the ranking model as a teacher model through model distillation, which makes an optimization objective of the recall model consistent with that of the ranking model, thereby implementing joint optimization of the large understanding and generation model and the retrieval model. In an exemplary embodiment, the recall model may be trained by using KL-divergence as supervision and using the ranking model as a teacher model.

In some embodiments, the end-to-end retrieval model may be trained separately before joint training. In an exemplary embodiment, the recall sub-model and the ranking sub-model may be jointly trained.

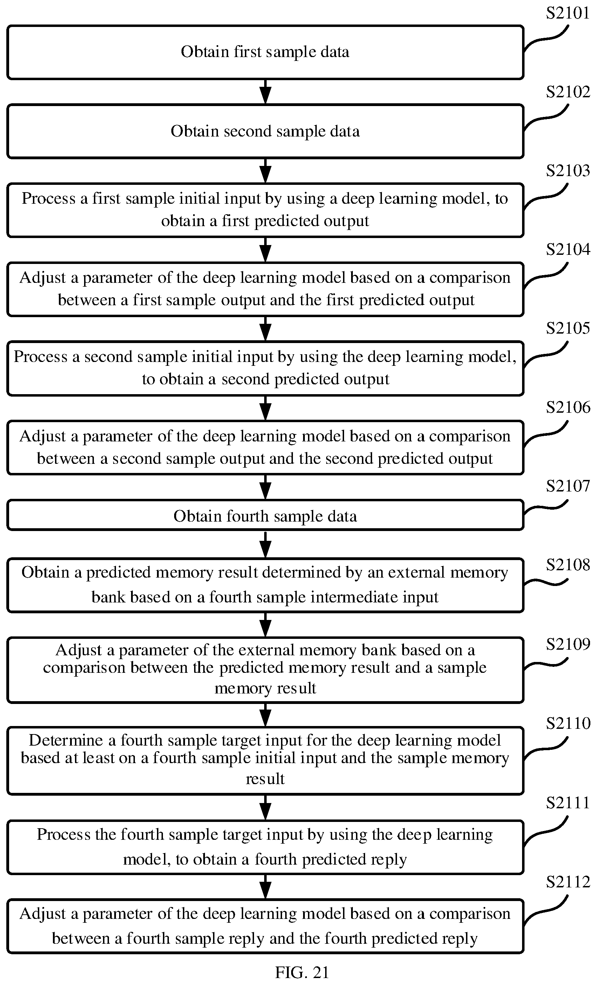

According to some embodiments, as shown in FIG. 21, the training method may further include: step S2107: obtaining fourth sample data, the fourth sample data including a fourth sample initial input, a fourth sample intermediate input recognizable by an external memory bank, a sample memory result, and a fourth sample reply, where the fourth sample intermediate input is determined based on the fourth sample initial input; step S2108: obtaining a predicted memory result determined by the external memory bank based on the fourth sample intermediate input; step S2109: adjusting a parameter of the external memory bank based on a comparison between the predicted memory result and the sample memory result; step S2110: determining a fourth sample target input for the deep learning model based at least on the fourth sample initial input and the sample memory result; step S2111: processing the fourth sample target input by using the deep learning model, to obtain a fourth predicted reply; and step S2112: adjusting a parameter of the deep learning model based on a comparison between the fourth sample reply and the fourth predicted reply. It can be understood that, operations of steps S2101 to S2106 in FIG. 21 are respectively similar to operations of steps S1701 to S1706 in FIG. 17. Details are not described here again. Therefore, joint training of the external memory bank and the large understanding and generation model is implemented.

It can be understood that the external memory bank obtained by using the above method may be used as an external functional component to be used in the data generation method described above to obtain external memory.

In some embodiments, the training objective of jointly training memory query and the large understanding and generation model may be to maximize a memory-enhanced reply generation probability:

$$p(r|c_t) = p(m_i|c_t, \mathcal{M})\, p(r|c_t, m_i)$$

where $M$ represents the external memory bank, $c_t$ represents a sample intermediate input corresponding to the external memory bank, which may include a sample initial input and context information, $m_i$ represents queried historical dialogues (that is, data groups), and $r$ represents a reply generated by the deep learning model. Correspondingly, $p(m_i|c_t, \mathcal{M})$ represents a memory query process, and $p(r|c_t, m_i)$ represents a memory-enhanced reply generation process. Through the joint optimization of the external memory bank and the large understanding and generation model based on the training objective, the jointly optimized external memory bank can provide historical dialogues that are more related to the user input and more helpful for generating replies, while the jointly optimized large understanding and generation model can generate higher-quality reply content for the user input based on the obtained historical dialogues.

In some embodiments, as described above, historical dialogue information related to the user input may be obtained from the external memory bank by calculating a similarity between dense vectors, which may be specifically implemented by using a neural network. In step S2109, a parameter of the neural network for calculating the similarity between dense vectors may be adjusted to increase a similarity between the sample memory result and the fourth sample intermediate input that is determined based on the fourth sample initial input, such that the optimized neural network (external memory bank) can return the sample memory result for the fourth sample intermediate input. It can be understood that, for parameter adjustment of the deep learning model in step S2112, reference may be made to step S1704 or step S1706 in FIG. 17 , which will not be repeated here.

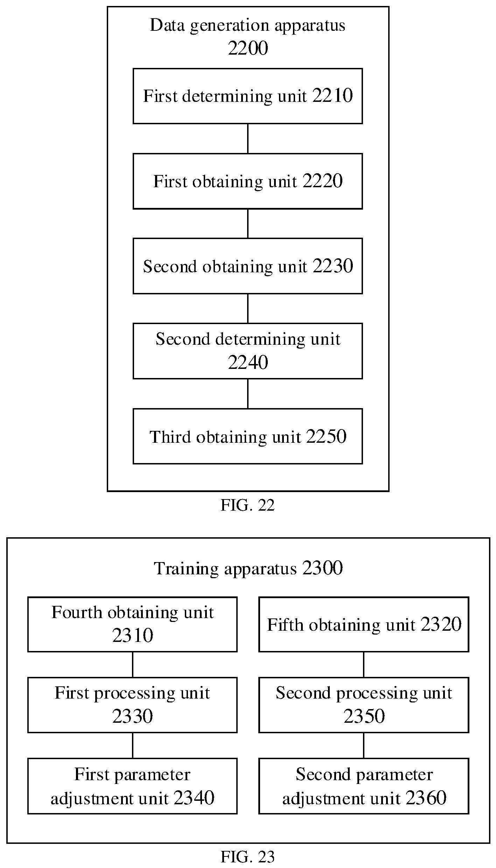

According to another aspect of the present disclosure, there is provided a data generation apparatus based on a deep learning model. The deep learning model is able to generate reply data based on input data of a user. As shown in FIG. 22, the data generation apparatus 2200 includes: a first determining unit 2210 configured to determine an initial input for the deep learning model based on input data from a user; a first obtaining unit 2220 configured to obtain a first output of the deep learning model, where a first functional component different from the deep learning model needs to be called in response to that the deep learning model determines to generate a reply based on the initial input, and the first output includes a first token for calling the first functional component and a first intermediate inquiry determined based on the initial input and recognizable by the first functional component; a second obtaining unit 2230 configured to obtain a first intermediate result determined by the first functional component based on the first intermediate inquiry; a second determining unit 2240 configured to determine a second input for the deep learning model based at least on the initial input and the first intermediate result; and a third obtaining unit 2250 configured to obtain a second output of the deep learning model for generating the reply to the initial input. It can be understood that operations of units 2210 to 2250 in the apparatus 2200 are respectively similar to operations of steps S201 to S205 in FIG. 2. Details are not described herein again.

The first functional component is an external memory bank, and the external memory bank stores a first data group set related to the user. Each data group in the first data group set includes at least a historical input data item and a historical reply item generated by the deep learning model for the historical input data item.

Each data group in the first data group set further includes an entry time item corresponding to a historical input data item and a historical reply item that are in the group. The first intermediate inquiry is based on the input data. The first intermediate result is a historical reply item corresponding to a historical input data item that is in the first data group set and whose similarity with the input data is higher than a first threshold.

According to some embodiments, the first intermediate inquiry may be based on the input data. The first intermediate result may be a historical reply item corresponding to a historical input data item that has the latest time stamp in the first data group set and whose similarity with the input data is higher than a first threshold.

According to some embodiments, the data generation apparatus may further include: a first entry unit configured to: in response to determining that a similarity between any data group in the first data group set and a first data group that is based on the input data and the reply is lower than a second threshold, enter the first data group into the first data group set.

According to some embodiments, the data generation apparatus may further include: a second entry unit configured to: in response to determining that a similarity between a second data group in the first data group set and a first data group that is based on the input data and the reply is higher than a third threshold and determining that the first data group conflicts with the second data group, enter the first data group into the first data group set, and delete the second data group from the first data group set.

According to some embodiments, the data generation apparatus may further include: a deletion unit configured to delete a data group whose timeliness expires from the external memory bank based on the entry time item.

According to some embodiments, the first determining unit may include: a first obtaining sub-unit configured to obtain, from the external memory bank based on the input data, a historical reply item corresponding to a historical input data item whose similarity with the input data is higher than a first threshold; and a first determining sub-unit configured to determine the initial input based on the input data and the historical reply item. The external memory bank may store a first data group set related to the user. Each data group in the first data group set may include at least a historical input data item and a historical reply item generated by the deep learning model for the historical input data item.

According to some embodiments, the second determining unit may include: a third determining sub-unit configured to determine the second input for the deep learning model based on the initial input, the first intermediate result, and the first intermediate inquiry.

According to some embodiments, the first functional component may be an external search engine.

According to some embodiments, the first functional component may be a retrieval model obtained by joint training with the deep learning model.

According to some embodiments, the first functional component may be at least one application programming interface that is callable by the deep learning model.

According to some embodiments, the second output may include a second token for calling a second functional component and a second intermediate inquiry that is obtained based on the second input and recognizable by the second functional component. The third obtaining unit may include: a third obtaining sub-unit configured to perform a corresponding function call operation for the second output, including: obtaining a second intermediate result determined by the second functional component based on the second intermediate inquiry; determining a third input for the deep learning model based at least on the second input and the second intermediate result; and obtaining a third output of the deep learning model; and a calling sub-unit configured to: in response to that an $N^{th}$ output of the deep learning model includes an $N^{th}$ token for calling an $N^{th}$ functional component and an $N^{th}$ intermediate inquiry obtained based on an $N^{th}$ input and recognizable by the $N^{th}$ functional component, perform a function call operation corresponding to the $N^{th}$ output until it is determined that an $(N+1)^{th}$ output includes no corresponding token for calling any functional component different from the deep learning model, and use the $(N+1)^{th}$ output as the reply to the initial input, where N is an integer greater than 2.

According to some embodiments, each of the second functional component and the $N^{th}$ functional component may be one in a functional component group including the following: an external search engine; a retrieval model obtained by joint training with the deep learning model; at least one application programming interface callable by the deep learning model; and an external memory bank, where the external memory bank stores a first data group set related to the user, and where each data group in the first data group set includes at least a historical input data item and a historical reply item generated by the deep learning model for the historical input data item.

According to some embodiments, the second output may include no corresponding token for calling any functional component different from the deep learning model. The third obtaining unit may include: a reply sub-unit configured to use the second output as the reply to the initial input.

According to some embodiments, the initial input may include context information of the input data.

According to some embodiments, the first determining unit may include: a second obtaining sub-unit configured to obtain, from an external memory bank, at least one pair of historical input data item and historical reply item whose similarity with the input data and the context information meets a fourth threshold; and a second determining sub-unit configured to determine the initial input for the deep learning model based on the input data, the context information, and the at least one pair of historical input data item and historical reply item. The external memory bank may store a first data group set related to the user. Each data group in the first data group set may include at least a historical input data item and a historical reply item generated by the deep learning model for the historical input data item.

According to another aspect of the present disclosure, there is provided a training apparatus for a deep learning model. The deep learning model is used to generate reply data based on input data of a user. As shown in FIG. 23, the training apparatus 2300 includes: a fourth obtaining unit 2310 configured to obtain first sample data, the first sample data including a first sample initial input and a first sample output, where the first sample initial input includes an expression of intention of calling a first preset functional component different from the deep learning model, and where the first sample output includes a first token for calling the first preset functional component and a first sample intermediate input recognizable by the first preset functional component; a fifth obtaining unit 2320 configured to obtain second sample data, the second sample data including a second sample initial input and a second sample output, where the second sample initial input includes no expression of intention of calling any preset functional component different from the deep learning model, and where the second sample output includes no corresponding token for calling any preset functional component; a first processing unit 2330 configured to process the first sample initial input by using the deep learning model, to obtain a first predicted output; a first parameter adjustment unit 2340 configured to adjust a parameter of the deep learning model based on a comparison between the first sample output and the first predicted output; a second processing unit 2350 configured to process the second sample initial input by using the deep learning model, to obtain a second predicted output; and a second parameter adjustment unit 2360 configured to adjust a parameter of the deep learning model based on a comparison between the second sample output and the second predicted output. It can be understood that operations of units 2310 to 2360 in the apparatus 2300 are respectively similar to operations of steps S1701 to S1706 in FIG. 17. Details are not described herein again.

According to some embodiments, the training apparatus may further include: a sixth obtaining unit configured to obtain third sample data, the third sample data including a third sample initial input, a sample search inquiry, a plurality of sample search results, and a third sample reply of the deep learning model for the third sample initial input, where the sample search inquiry is a sample intermediate input generated by the deep learning model based on the third sample initial input, and the sample intermediate input is recognizable by a retrieval model different from the deep learning model, and where the plurality of sample search results are results outputted by the retrieval model based on the sample search inquiry; a ranking unit configured to perform a ranking operation on the plurality of sample search results based on a matching degree between each of the plurality of sample search results and the third sample reply; and a training unit configured to train the retrieval model based on the ranked plurality of sample search results.

According to some embodiments, the ranking unit may include: a screening sub-unit configured to select a first sample search result having the highest current matching degree from the plurality of sample search results; a deletion sub-unit configured to delete overlapping content between the third sample reply and the first sample search result to update the third sample reply; and a ranking sub-unit configured to repeat the ranking operation on remaining parts of the plurality of sample search results based on a matching degree between each of the remaining parts and the updated third sample reply until completion of ranking all of the plurality of sample search results.

According to some embodiments, the retrieval model may include a ranking sub-model and a recall sub-model. The training unit may include: a first training sub-unit configured to train the ranking sub-model of the retrieval model based on the ranked plurality of sample search results; and a second training sub-unit configured to use the trained ranking sub-model as a teacher model to train the recall sub-model.

According to some embodiments, the training apparatus may further include: a seventh obtaining unit configured to obtain fourth sample data, the fourth sample data including a fourth sample initial input, a fourth sample intermediate input recognizable by an external memory bank, a sample memory result, and a fourth sample reply, where the fourth sample intermediate input is determined based on the fourth sample initial input; an eighth obtaining unit configured to obtain a predicted memory result determined by the external memory bank based on the fourth sample intermediate input; a third parameter adjustment unit configured to adjust a parameter of the external memory bank based on a comparison between the predicted memory result and the sample memory result; a third determining unit configured to determine a fourth sample target input for the deep learning model based at least on the fourth sample initial input and the sample memory result; a third processing unit configured to process the fourth sample target input by using the deep learning model, to obtain a fourth predicted reply; and a fourth parameter adjustment unit configured to adjust a parameter of the deep learning model based on a comparison between the fourth sample reply and the fourth predicted reply.

In the technical solutions of the present disclosure, collection, storage, use, processing, transmission, provision, disclosure, etc. of user personal information involved all comply with related laws and regulations and are not against the public order and good morals.

According to the embodiments of the present disclosure, an electronic device, a readable storage medium, and a computer program product are further provided.

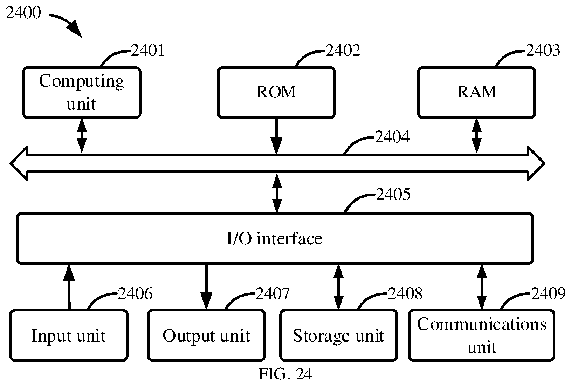

Referring to FIG. 24, a block diagram of a structure of an electronic device 2400 that can serve as a server or a client of the present disclosure is now described, which is an example of a hardware device that can be applied to various aspects of the present disclosure. The electronic device is intended to represent various forms of digital electronic computer devices, such as a laptop computer, a desktop computer, a workstation, a personal digital assistant, a server, a blade server, a mainframe computer, and other suitable computers. The electronic device may further represent various forms of mobile apparatuses, such as a personal digital assistant, a cellular phone, a smartphone, a wearable device, and other similar computing apparatuses. The components shown herein, their connections and relationships, and their functions are merely examples, and are not intended to limit the implementation of the present disclosure described and/or required herein.

As shown in FIG. 24, the electronic device 2400 includes a computing unit 2401. The computing unit may perform various appropriate actions and processing according to a computer program stored in a read-only memory (ROM) 2402 or a computer program loaded from a storage unit 2408 to a random access memory (RAM) 2403. The RAM 2403 may further store various programs and data required for the operation of the electronic device 2400. The computing unit 2401, the ROM 2402, and the RAM 2403 are connected to each other through a bus 2404. An input/output (I/O) interface 2405 is also connected to the bus 2404.

A plurality of components in the electronic device 2400 are connected to the I/O interface 2405, including: an input unit 2406, an output unit 2407, the storage unit 2408, and a communications unit 2409. The input unit 2406 may be any category of device capable of entering information to the electronic device 2400. The input unit 2406 may receive entered digit or character information, and generate a key signal input related to user settings and/or function control of the electronic device, and may include, but is not limited to, a mouse, a keyboard, a touchscreen, a trackpad, a trackball, a joystick, a microphone, and/or a remote controller. The output unit 2407 may be any category of device capable of presenting information, and may include, but is not limited to, a display, a speaker, a video/audio output terminal, a vibrator, and/or a printer. The storage unit 2408 may include, but is not limited to, a magnetic disk and an optical disk. The communications unit 2409 allows the electronic device 2400 to exchange information/data with other devices via a computer network such as the Internet and/or various telecommunications networks, and may include, but is not limited to, a modem, a network interface card, an infrared communications device, a wireless communications transceiver, and/or a chipset, for example, a Bluetooth device, an 802.11 device, a Wi-Fi device, a WiMax device, or a cellular communications device.

The computing unit 2401 may be various general-purpose and/or special-purpose processing components with processing and computing capabilities. Some examples of the computing unit 2401 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The computing unit 2401 performs the various methods and processing described above, for example, the data generation method or the training method for a deep learning model. For example, in some embodiments, the data generation method or the training method for a deep learning model may be implemented as a computer software program, which is tangibly contained in a machine-readable medium, such as the storage unit 2408. In some embodiments, a part or all of the computer program may be loaded and/or installed onto the electronic device 2400 via the ROM 2402 and/or the communications unit 2409. When the computer program is loaded onto the RAM 2403 and executed by the computing unit 2401, one or more steps of the data generation method or the training method for a deep learning model described above can be performed. Alternatively, in other embodiments, the computing unit 2401 may be configured, by any other suitable means (for example, by means of firmware), to perform the data generation method or the training method for a deep learning model.

Various implementations of the systems and technologies described herein above can be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logical device (CPLD), computer hardware, firmware, software, and/or a combination thereof. These various implementations may include: The systems and technologies are implemented in one or more computer programs, where the one or more computer programs may be executed and/or interpreted on a programmable system including at least one programmable processor. The programmable processor may be a dedicated or general-purpose programmable processor that can receive data and instructions from a storage system, at least one input apparatus, and at least one output apparatus, and transmit data and instructions to the storage system, the at least one input apparatus, and the at least one output apparatus.

Program codes used to implement the method of the present disclosure can be written in any combination of one or more programming languages. These program codes may be provided for a processor or a controller of a general-purpose computer, a special-purpose computer, or other programmable data processing apparatuses, such that when the program codes are executed by the processor or the controller, the functions/operations specified in the flowcharts and/or block diagrams are implemented. The program codes may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and a pointing apparatus (for example, a mouse or a trackball) through which the user can provide an input to the computer. Other categories of apparatuses can also be used to provide interaction with the user; for example, feedback provided to the user can be any form of sensory feedback (for example, visual feedback, auditory feedback, or tactile feedback), and an input from the user can be received in any form (including an acoustic input, a voice input, or a tactile input).

The systems and technologies described herein can be implemented in a computing system (for example, as a data server) including a backend component, or a computing system (for example, an application server) including a middleware component, or a computing system (for example, a user computer with a graphical user interface or a web browser through which the user can interact with the implementation of the systems and technologies described herein) including a frontend component, or a computing system including any combination of the backend component, the middleware component, or the frontend component. The components of the system can be connected to each other through digital data communication (for example, a communications network) in any form or medium. Examples of the communications network include: a local area network (LAN), a wide area network (WAN), the Internet, and a blockchain network.

A computer system may include a client and a server. The client and the server are generally far away from each other and usually interact through a communications network. A relationship between the client and the server is generated by computer programs running on respective computers and having a client-server relationship with each other. The server may be a cloud server, a server in a distributed system, or a server combined with a blockchain.

**Claims**

1. A computer-implemented data generation method based on a deep learning model, wherein the deep learning model is able to generate reply data based on input data of a user, and the data generation method comprises:

   determining (S201) an initial input for the deep learning model based on input data from a user;
   obtaining (S202) a first output of the deep learning model, wherein in response to the deep learning model determining that generating a reply based on the initial input requires calling a first functional component different from the deep learning model, the first output comprises a first token for calling the first functional component and a first intermediate inquiry determined based on the initial input and recognizable by the first functional component;
   obtaining (S203) a first intermediate result determined by the first functional component based on the first intermediate inquiry;
   determining (S204) a second input for the deep learning model based at least on the initial input and the first intermediate result; and
   obtaining (S205) a second output of the deep learning model for generating the reply to the initial input,
   **characterised in that**,
   the first functional component is an external memory bank, and the external memory bank stores a first data group set related to the user, and wherein each data group in the first data group set comprises at least a historical input data item and a historical reply item generated by the deep learning model for the historical input data item,
   wherein the first intermediate inquiry is based on the input data, and wherein the first intermediate result is a historical reply item corresponding to a historical input data item that is in the first data group set and whose similarity with the input data is higher than a first threshold.

2. The data generation method according to claim 1, wherein the determining a second input for the deep learning model based at least on the initial input and the first intermediate result comprises:
   determining the second input for the deep learning model based on the initial input, the first intermediate result, and the first intermediate inquiry.

3. The data generation method according to claim 1, wherein the second output comprises no corresponding token for calling any functional component different from the deep learning model, and wherein
   the obtaining a second output of the deep learning model for generating the reply to the initial input comprises:
   using the second output as the reply to the initial input.

4. The data generation method according to claim 1, wherein the second output comprises a second token for calling a second functional component and a second intermediate inquiry that is obtained based on the second input and recognizable by the second functional component, and wherein
   the obtaining a second output of the deep learning model for generating the reply to the initial input comprises:

   performing a corresponding function call operation for the second output, comprising:

   obtaining a second intermediate result determined by the second functional component based on the second intermediate inquiry;

determining a third input for the deep learning model based at least on the second input and the second intermediate result;

obtaining a third output of the deep learning model; and

in response to that an $N^{th}$ output of the deep learning model comprises an $N^{th}$ token for calling an $N^{th}$ functional component and an $N^{th}$ intermediate inquiry obtained based on an $N^{th}$ input and recognizable by the $N^{th}$ functional component, performing a function call operation corresponding to the $N^{th}$ output until it is determined that an $(N+1)^{th}$ output comprises no corresponding token for calling any functional component different from the deep learning model, and using the $(N+1)^{th}$ output as the reply to the initial input, wherein N is an integer greater than 2.

5. The data generation method according to claim 4, wherein each of the second functional component and the $N^{th}$ functional component is one in a functional component group comprising the following:

an external search engine;
a retrieval model obtained by joint training with the deep learning model;
at least one application programming interface callable by the deep learning model; and
an external memory bank, wherein the external memory bank stores a first data group set related to the user, and wherein each data group in the first data group set comprises at least a historical input data item and a historical reply item generated by the deep learning model for the historical input data item.

6. A data generation apparatus (2200) based on a deep learning model, wherein the deep learning model is able to generate reply data based on input data of a user, and the data generation apparatus comprises:

a first determining unit (2210) configured to determine an initial input for the deep learning model based on input data from a user;
a first obtaining unit (2220) configured to obtain a first output of the deep learning model, wherein in response to the deep learning model determining that generating a reply based on the initial input requires calling a first functional component different from the deep learning model, the first output comprises a first token for calling the first functional component and a first intermediate inquiry determined based on the initial input and recognizable by the first functional component;
a second obtaining unit (2230) configured to obtain a first intermediate result determined by the first functional component based on the first intermediate inquiry;
a second determining unit (2240) configured to determine a second input for the deep learning model based at least on the initial input and the first intermediate result; and
a third obtaining unit (2250) configured to obtain a second output of the deep learning model for generating the reply to the initial input,
**characterised in that**,
the first functional component is an external memory bank, and the external memory bank stores a first data group set related to the user, and wherein each data group in the first data group set comprises at least a historical input data item and a historical reply item generated by the deep learning model for the historical input data item, wherein the first intermediate inquiry is based on the input data, and wherein the first intermediate result is a historical reply item corresponding to a historical input data item that is in the first data group set and whose similarity with the input data is higher than a first threshold.

7. A non-transitory computer-readable storage medium storing computer instructions which, when executed by a computer, cause the computer to perform a method according to any one of claims 1 to 5.

**Patentansprüche**

1. Computerimplementiertes Datenerzeugungsverfahren anhand eines Deep-Learning-Modells, wobei das Deep-Learning-Modell in der Lage ist, Antwortdaten anhand von Eingabedaten eines Benutzers zu erzeugen, und das Datenerzeugungsverfahren Folgendes umfasst:

Bestimmen (S201) einer ersten Eingabe für das Deep-Learning-Modell anhand von Eingabedaten von einem Benutzer;
Erhalten (S202) einer ersten Ausgabe des Deep-Learning-Modells, wobei als Reaktion darauf, dass das Deep-Learning-Modell bestimmt, dass das Erzeugen einer Antwort anhand der ersten Eingabe das Aufrufen einer ersten Funktionskomponente erfordert, die sich von dem Deep-Learning-Modell unterscheidet, die erste Ausgabe ein erstes Token zum Aufrufen der ersten Funktionskomponente und eine erste Zwischenabfrage umfasst, die anhand der ersten Eingabe bestimmt wird und durch die erste Funktionskomponente erkennbar ist;

Erhalten (S203) eines ersten Zwischenergebnisses, das durch die erste Funktionskomponente anhand der ersten Zwischenabfrage bestimmt wird;

Bestimmen (S204) einer zweiten Eingabe für das Deep-Learning-Modell anhand mindestens der ersten Eingabe und des ersten Zwischenergebnisses; und

Erhalten (S205) einer zweiten Ausgabe des Deep-Learning-Modells zum Erzeugen der Antwort auf die erste Eingabe,

**dadurch gekennzeichnet, dass**

die erste Funktionskomponente eine externe Speicherbank ist und die externe Speicherbank einen ersten Datengruppensatz speichert, der sich auf den Benutzer bezieht, und wobei jede Datengruppe in dem ersten Datengruppensatz mindestens ein historisches Eingabedatenelement und ein historisches Antwortelement umfasst, das durch das Deep-Learning-Modell für das historische Eingabedatenelement erzeugt wird,

wobei die erste Zwischenabfrage auf den Eingabedaten basiert, und wobei das erste Zwischenergebnis ein historisches Antwortelement ist, das einem historischen Eingabedatenelement entspricht, das sich in dem ersten Datengruppensatz befindet und dessen Ähnlichkeit mit den Eingabedaten höher als ein erster Schwellenwert ist.

2. Datenerzeugungsverfahren nach Anspruch 1, wobei das Bestimmen einer zweiten Eingabe für das Deep-Learning-Modell mindestens anhand der ersten Eingabe und des ersten Zwischenergebnisses Folgendes umfasst:
Bestimmen der zweiten Eingabe für das Deep-Learning-Modell anhand der ersten Eingabe, des ersten Zwischenergebnisses und der ersten Zwischenabfrage.

3. Datenerzeugungsverfahren nach Anspruch 1, wobei die zweite Ausgabe kein entsprechendes Token zum Aufrufen einer beliebigen anderen Funktionskomponente umfasst, die sich von dem Deep-Learning-Modell unterscheidet, und wobei
das Erhalten einer zweiten Ausgabe des Deep-Learning-Modells zum Erzeugen der Antwort auf die erste Eingabe Folgendes umfasst:
Verwenden der zweiten Ausgabe als Antwort auf die erste Eingabe.

4. Datenerzeugungsverfahren nach Anspruch 1, wobei die zweite Ausgabe ein zweites Token zum Aufrufen einer zweiten Funktionskomponente und eine zweite Zwischenabfrage umfasst, die anhand der zweiten Eingabe erhalten wird und durch die zweite Funktionskomponente erkennbar ist, und wobei
das Erhalten einer zweiten Ausgabe des Deep-Learning-Modells zum Erzeugen der Antwort auf die erste Eingabe Folgendes umfasst:

Durchführen eines entsprechenden Funktionsaufrufvorgangs für die zweite Ausgabe, umfassend:

Erhalten eines zweiten Zwischenergebnisses, das durch die zweite Funktionskomponente anhand der zweiten Zwischenabfrage bestimmt wird;
Bestimmen einer dritten Eingabe für das Deep-Learning-Modell anhand mindestens der zweiten Eingabe und des zweiten Zwischenergebnisses;
Erhalten einer dritten Ausgabe des Deep-Learning-Modells; und

als Reaktion darauf, dass eine N-te Ausgabe des Deep-Learning-Modells ein N-tes Token zum Aufrufen einer N-ten Funktionskomponente und eine N-te Zwischenabfrage umfasst, die anhand einer N-ten Eingabe erhalten wird und von der N-ten Funktionskomponente erkennbar ist, Durchführen eines Funktionsaufrufvorgangs, der der N-ten Ausgabe entspricht, bis bestimmt wird, dass eine (N+1)-te Ausgabe kein entsprechendes Token zum Aufrufen einer beliebigen anderen Funktionskomponente umfasst, die sich von dem Deep-Learning-Modell unterscheidet, und Verwenden der (N+1)-ten Ausgabe als Antwort auf die erste Eingabe, wobei N eine ganze Zahl größer als 2 ist.

5. Datenerzeugungsverfahren nach Anspruch 4, wobei die zweite Funktionskomponente und die N-te Funktionskomponente jeweils eine Komponente aus einer Funktionskomponentengruppe ist, die Folgendes umfasst:

eine externe Suchmaschine;
ein Retrieval-Modell, das durch gemeinsames Training mit dem Deep-Learning-Modell erhalten wird;
mindestens eine Anwendungsprogrammierschnittstelle, die durch das Deep-Learning-Modell aufrufbar ist; und

eine externe Speicherbank, wobei die externe Speicherbank einen ersten Datengruppensatz speichert, der sich auf den Benutzer bezieht, und wobei jede Datengruppe in dem ersten Datengruppensatz mindestens ein historisches Eingabedatenelement und ein historisches Antwortelement umfasst, das durch das Deep-Learning-Modell für das historische Eingabedatenelement erzeugt wird.

6. Datenerzeugungsvorrichtung (2200) anhand eines Deep-Learning-Modells, wobei das Deep-Learning-Modell in der Lage ist, Antwortdaten anhand von Eingabedaten eines Benutzers zu erzeugen, und die Datenerzeugungsvorrichtung Folgendes umfasst:

eine erste Bestimmungseinheit (2210), die so konfiguriert ist, dass sie eine erste Eingabe für das Deep-Learning-Modell anhand von Eingabedaten von einem Benutzer bestimmt;

eine erste Erhaltungseinheit (2220), die so konfiguriert ist, dass sie eine erste Ausgabe des Deep-Learning-Modells erhält, wobei als Reaktion darauf, dass das Deep-Learning-Modell bestimmt, dass das Erzeugen einer Antwort anhand der ersten Eingabe das Aufrufen einer ersten Funktionskomponente erfordert, die sich von dem Deep-Learning-Modell unterscheidet, die erste Ausgabe ein erstes Token zum Aufrufen der ersten Funktionskomponente und eine erste Zwischenabfrage umfasst, die anhand der ersten Eingabe bestimmt wird und durch die erste Funktionskomponente erkennbar ist;

eine zweite Erhaltungseinheit (2230), die so konfiguriert ist, dass sie ein erstes Zwischenergebnis erhält, das durch die erste Funktionskomponente anhand der ersten Zwischenabfrage bestimmt wird;

eine zweite Bestimmungseinheit (2240), die so konfiguriert ist, dass sie eine zweite Eingabe für das Deep-Learning-Modell anhand mindestens der ersten Eingabe und des ersten Zwischenergebnisses bestimmt; und

eine dritte Erhaltungseinheit (2250), die so konfiguriert ist, dass sie eine zweite Ausgabe des Deep-Learning-Modells zum Erzeugen der Antwort auf die erste Eingabe erhält,

**dadurch gekennzeichnet, dass**

die erste Funktionskomponente eine externe Speicherbank ist und die externe Speicherbank einen ersten Datengruppensatz speichert, der sich auf den Benutzer bezieht, und wobei jede Datengruppe in dem ersten Datengruppensatz mindestens ein historisches Eingabedatenelement und ein historisches Antwortelement umfasst, das durch das Deep-Learning-Modell für das historische Eingabedatenelement erzeugt wird,

wobei die erste Zwischenabfrage auf den Eingabedaten basiert, und wobei das erste Zwischenergebnis ein historisches Antwortelement ist, das einem historischen Eingabedatenelement entspricht, das sich in dem ersten Datengruppensatz befindet und dessen Ähnlichkeit mit den Eingabedaten höher als ein erster Schwellenwert ist.

7. Nicht-flüchtiges computerlesbares Speichermedium, das Computeranweisungen speichert, die, wenn sie durch einen Computer ausgeführt werden, den Computer veranlassen, ein Verfahren nach einem der Ansprüche 1 bis 5 durchzuführen.

## Revendications

1. Procédé mis en œuvre par ordinateur de génération de données sur la base d'un modèle d'apprentissage profond, dans lequel le modèle d'apprentissage profond peut générer des données de réponse sur la base de données d'entrée d'un utilisateur, et le procédé de génération de données comprend :

la détermination (E201) d'une entrée initiale pour le modèle d'apprentissage profond sur la base de données d'entrée provenant d'un utilisateur ;

l'obtention (E202) d'une première sortie du modèle d'apprentissage profond, dans lequel en réponse à la détermination par le modèle d'apprentissage profond qu'une génération d'une réponse sur la base de l'entrée initiale nécessite l'appel d'un premier composant fonctionnel différent du modèle d'apprentissage profond, la première sortie comprend un premier jeton pour appeler le premier composant fonctionnel et une première interrogation intermédiaire déterminée sur la base de l'entrée initiale et reconnaissable par le premier composant fonctionnel ;

l'obtention (E203) d'un premier résultat intermédiaire déterminé par le premier composant fonctionnel sur la base de la première interrogation intermédiaire ;

la détermination (E204) d'une deuxième entrée pour le modèle d'apprentissage profond sur la base au moins de l'entrée initiale et du premier résultat intermédiaire ; et

l'obtention (E205) d'une deuxième sortie du modèle d'apprentissage profond pour générer la réponse à l'entrée initiale,

**caractérisé en ce que**

le premier composant fonctionnel est une banque de mémoire externe, et la banque de mémoire externe stocke un premier ensemble de groupes de données relatif à l'utilisateur, et dans lequel chaque groupe de données dans le premier ensemble de groupes de données comprend au moins un élément de données d'entrée historique et un élément de réponse historique générés par le modèle d'apprentissage profond pour l'élément de données d'entrée historique,

dans lequel la première interrogation intermédiaire est basée sur les données d'entrée, et dans lequel le premier résultat intermédiaire est un élément de réponse historique correspondant à un élément de données d'entrée historique qui est dans le premier ensemble de groupes de données et dont la similarité avec les données d'entrée est supérieure à un premier seuil.

2. Procédé de génération de données selon la revendication 1, dans lequel la détermination d'une deuxième entrée pour le modèle d'apprentissage profond sur la base au moins de l'entrée initiale et du premier résultat intermédiaire comprend :

la détermination de la deuxième entrée pour le modèle d'apprentissage profond sur la base de l'entrée initiale, du premier résultat intermédiaire et de la première interrogation intermédiaire.

3. Procédé de génération de données selon la revendication 1, dans lequel la deuxième sortie ne comprend aucun jeton correspondant pour appeler un quelconque composant fonctionnel différent du modèle d'apprentissage profond, et dans lequel

l'obtention d'une deuxième sortie du modèle d'apprentissage profond pour générer la réponse à l'entrée initiale comprend :

l'utilisation de la deuxième sortie en tant que la réponse à l'entrée initiale.

4. Procédé de génération de données selon la revendication 1, dans lequel la deuxième sortie comprend un deuxième jeton pour appeler un deuxième composant fonctionnel et une deuxième interrogation intermédiaire qui est obtenue sur la base de la deuxième entrée et est reconnaissable par le deuxième composant fonctionnel, et dans lequel l'obtention d'une deuxième sortie du modèle d'apprentissage profond pour générer la réponse à l'entrée initiale comprend :

la réalisation d'une opération d'appel fonctionnel correspondante pour la deuxième sortie, comprenant :

l'obtention d'un deuxième résultat intermédiaire déterminé par le deuxième composant fonctionnel sur la base de la deuxième interrogation intermédiaire ;
la détermination d'une troisième entrée pour le modèle d'apprentissage profond sur la base au moins de la deuxième entrée et du deuxième résultat intermédiaire ;
l'obtention d'une troisième sortie du modèle d'apprentissage profond ; et

en réponse au fait qu'une $n^{ième}$ sortie du modèle d'apprentissage profond comprend un $n^{ième}$ jeton pour appeler un $n^{ième}$ composant fonctionnel et une $n^{ième}$ interrogation intermédiaire obtenue sur la base d'une $n^{ième}$ entrée et reconnaissable par le $N^{ième}$ composant fonctionnel, la réalisation d'une opération d'appel fonctionnel correspondant à la $N^{ième}$ sortie jusqu'à ce qu'il soit déterminé qu'une $(N+1)^{ième}$ sortie ne comprend aucun jeton correspondant pour appeler un quelconque composant fonctionnel différent du modèle d'apprentissage profond, et l'utilisation de la $(N+1)^{ième}$ sortie en tant que la réponse à l'entrée initiale, dans lequel N est un nombre entier supérieur à 2.

5. Procédé de génération de données selon la revendication 4, dans lequel chacun du deuxième composant fonctionnel et du $N^{ième}$ composant fonctionnel est un composant dans un groupe de composants fonctionnels comprenant ce qui suit :

un moteur de recherche externe ;
un modèle de récupération obtenu par apprentissage conjoint avec le modèle d'apprentissage profond ;
au moins une interface de programmation applicative pouvant être appelée par le modèle d'apprentissage profond ; et
une banque de mémoire externe, dans lequel la banque de mémoire externe stocke un premier ensemble de groupes de données relatif à l'utilisateur, et dans lequel chaque groupe de données dans le premier ensemble de groupes de données comprend au moins un élément de données d'entrée historique et un élément de réponse historique générés par le modèle d'apprentissage profond pour l'élément de données d'entrée historique.

**6.** Appareil de génération de données (2200) basé sur un modèle d'apprentissage profond, dans lequel le modèle d'apprentissage profond peut générer des données de réponse sur la base de données d'entrée d'un utilisateur, et l'appareil de génération de données comprend :

une première unité de détermination (2210) configurée pour déterminer une entrée initiale pour le modèle d'apprentissage profond sur la base de données d'entrée provenant d'un utilisateur ;

une première unité d'obtention (2220) configurée pour obtenir une première sortie du modèle d'apprentissage profond, dans lequel en réponse à la détermination par le modèle d'apprentissage profond qu'une génération d'une réponse sur la base de l'entrée initiale nécessite l'appel d'un premier composant fonctionnel différent du modèle d'apprentissage profond, la première sortie comprend un premier jeton pour appeler le premier composant fonctionnel et une première interrogation intermédiaire déterminée sur la base de l'entrée initiale et reconnaissable par le premier composant fonctionnel ;

une deuxième unité d'obtention (2230) configurée pour obtenir un premier résultat intermédiaire déterminé par le premier composant fonctionnel sur la base de la première interrogation intermédiaire ;

une deuxième unité de détermination (2240) configurée pour déterminer une deuxième entrée pour le modèle d'apprentissage profond sur la base au moins de l'entrée initiale et du premier résultat intermédiaire ; et

une troisième unité d'obtention (2250) configurée pour obtenir une deuxième sortie du modèle d'apprentissage profond pour générer la réponse à l'entrée initiale,

**caractérisé en ce que**

le premier composant fonctionnel est une banque de mémoire externe, et la banque de mémoire externe stocke un premier ensemble de groupes de données relatif à l'utilisateur, et dans lequel chaque groupe de données de l'ensemble de groupes de données comprend au moins un élément de données d'entrée historique et un élément de réponse historique générés par le modèle d'apprentissage profond pour l'élément de données d'entrée historique,

dans lequel la première interrogation intermédiaire est basée sur les données d'entrée, et dans lequel le premier résultat intermédiaire est un élément de réponse historique correspondant à un élément de données d'entrée historique qui est dans le premier ensemble de groupes de données et dont la similarité avec les données d'entrée est supérieure à un premier seuil.

**7.** Support de stockage non transitoire lisible par ordinateur stockant des instructions informatiques, qui, lorsqu'elles sont exécutées par un ordinateur, amènent l'ordinateur à réaliser un procédé selon l'une quelconque des revendications 1 à 5.

FIG. 1

S201

Determine an initial input for a deep learning model based on input data from a user

S202

Obtain a first output of the deep learning model

S203

Obtain a first intermediate result determined by a first functional component based on the first intermediate inquiry

S204

Determine a second input for the deep learning model based at least on the initial input and the first intermediate result

S205

Obtain a second output of the deep learning model for generating a reply to the initial input

FIG. 2

FIG. 3

FIG. 4

Intelligent system 410

Add

Delete

Query

External memory bank 420

30

S201

S501

Obtain, from an external memory bank based on input data, a historical reply item corresponding to a historical input data item whose similarity with the input data is higher than a first threshold

S502

Determine an initial input based on the input data and the historical reply item

FIG. 5

Recommend me some books.

I recommend the following best-selling book list for you:
*Three Kingdoms*
*Journey to the West*

One month later...

Do you still remember the book list recommended to me last month

I recommend the following best-selling book list for you:
*Dream of Red Mansions*
*The Scholars*

Dialogue system without an external memory bank 610

Recommend me some books.

Ok, these books are recommended to you:
*Meng Xiang Shi Fen*
*The Pursuit of Happiness*

One month later...

Do you still remember the book list recommended to me last month

Yes, the list of books I recommended to you last month include the following books:
*Meng Xiang Shi Fen*
*The Pursuit of Happiness*

Query

| Recommend me some books. | Ok, these books are recommended to you: *Meng Xiang Shi Fen* *The Pursuit of Happiness* | (One month ago) |
|---|---|---|

External memory bank 630

Intelligent system with an external memory bank 620

FIG. 6

API 1   *Returned result*          API 2   *Returned result*              Reply

*Call*                              *Call*

<api1>input_1</api1>               <api2>input_2</api2>

*Decision-making*          *Decision-making*                    *Generation*

| | |
|---|---|
| | Large understanding and<br>generation model 710 |

*Initial*      *Second*      *Third*
*input*        *input*       *input*

User input   +   ⌐ ¬   +  <api1-r>result_1</api1-r>   +   ⌐ ¬   +  <api2-r>result_2</api2-r>

FIG. 7

What is the famous poem
written by the son of the lord of
Wei during the Three Kingdoms
period?

The lord of Wei during the
Three Kingdoms period was
Cao Cao.

Dialogue system without knowledge
enhancement 810

What is the famous poem
written by the son of the lord
of Wei during the Three
Kingdoms period?

During the Three Kingdoms period,
one of the sons of the lord of Wei
Cao Cao is Cao Zhi, and his famous
poem is "Seven Steps Verse".

Search/
Retrieval

| Result 1:<br>The lord of Wei during the Three Kingdoms period was Cao Cao. According to historical records, he had a total of 25 sons, among whom the most famous ones were Cao Pi and Cao Zhi. | Result 2:<br>The "Seven Steps Verse" is a poem written by Cao Zhi, a literati of the Wei Kingdom during the Three Kingdoms period (son of Cao Cao). This poem has won the admiration of readers for thousands of years. | ...... |
|---|---|---|

Intelligent system with knowledge
enhancement 820

Search engine/Retrieval model 830

FIG. 8

What day is it today?

I'm sorry, as a language model, I am not able to know what day it is today.

Dialogue system without capability expansion 910

What day is it today?

Today is Sunday, August 21, 20XX and it is sunny.

API call

| Call date and weekday APIs | Call weather API |
|---|---|

API 930

Intelligent system with capability expansion 920

FIG. 9

S205

Perform a corresponding function call operation for a second output, including: Obtain a second intermediate result determined by a second functional component based on a second intermediate inquiry, and determine a third input for a deep learning model based at least on a second input and the second intermediate result; and obtain a third output of the deep learning model

S1001

In response to that an $N^{th}$ output of the deep learning model includes an $N^{th}$ token for calling an $N^{th}$ functional component and an $N^{th}$ intermediate inquiry obtained based on an $N^{th}$ input and recognizable by the $N^{th}$ functional component, perform a function call operation corresponding to the $N^{th}$ output until it is determined that an $(N+1)^{th}$ output includes no corresponding token for calling any functional component different from the deep learning model, and use the $(N+1)^{th}$ output as a reply to an initial input

S1002

FIG. 10

My email address is:
xx@example.com

Okay, I got it.

One week later...

I want to write an article about
tourism in X city and send it
to the email address I told you
last week.

Some of X city's famous
tourist attractions include
Square A , Park B...

Dialogue system without capability
enhancement 1110

My email address is:
xx@example.com

Okay, I got it.

One week later...

I want to write an article about
tourism in X city and send it to the
email address I told you last week.

Alright, I have already written
an article for you. "X City is a
beautiful city with stunning
scenery... The best time to visit
X City is in the spring, when
the city is shrouded in mist... X
City's cuisine is famous all over
the world, and visitors should
definitely try it while touring...
There is no airport in X City, so
it is more convenient to travel
there by high-speed train... If
you have the opportunity to
visit X City, you will definitely
fall in love with this city." The
article has been sent to your
email address
xx@example.com

Intelligent system with capability
enhancement 1120

Query

| My email address is: xx@example.com | Okay, I got it. | (One week ago) |
|---|---|---|

External memory bank 1130

Search/
Retrieval

| Result 1: The best time to visit X city is in the spring, when the city is shrouded in mist during the continuous rainy days, creating a unique scenery that is enchanting and intoxicating. | Result 2: X city's cuisine has a long history and is famous all over the world, with many popular dishes that are a must-try. | Result 3: X city does not have an airport and it would be more convenient to take a high-speed train than to fly to a nearby airport and transfer by car. |
|---|---|---|

Search engine/Retrieval model 1140

API call

Call an API for sending an
email

API 1150

FIG. 11

Singer A's "XX" is really more flavorful the more you listen to it.

I also really like this song.

One week later...

In the living room, play the song I mentioned last week and help me look up the lyrics.

Which song's lyrics would you like to search for?

Dialogue system without capability enhancement 1210

Singer A's "XX" is really more flavorful the more you listen to it.

I also really like this song.

One week later...

In the living room, play the song I mentioned last week and help me look up the lyrics.

The song you mentioned last week was Singer A's "XX". The lyrics for "XX" are:
······
······
······
······

Intelligent system with capability enhancement 1220

Query

| Singer A's "XX" is really more flavorful the more you listen to it. | I also really like this song. | (One week ago) |

External memory bank 1230

API call

Play singer A's "XX" on the stereo in the living room.

API 1240

Search/ Retrieval

Result 1:
Lyrics for "XX" (by singer A): ...

Search engine/Retrieval model 1250

FIG. 12

S201

Obtain, from an external memory bank, at least one pair of historical input data item and historical reply item whose similarity with input data and context information meets a fourth threshold

S1301

Determine an initial input for a deep learning model based on the input data, the context information, and the at least one pair of historical input data item and historical reply item

S1302

FIG. 13

What are the benefits and drawbacks of the emergence of artificial intelligence and big data on the management of human resources in companies?

Benefits:
1. It can reduce the pressure in human resources management and enhance the efficiency and quality of human resources management.
2. Data management can better implement human resources management under the context of big data.
3. Utilizing artificial intelligence can accurately screen resumes and find job seekers who are professionally aligned with the company's needs.

Drawbacks:
1. There is a risk of enterprise information and trade secrets being stolen.
2. The application of artificial intelligence may lead to an oversupply of human resources, increased job requirements, and a lack of specialized talent.
3. Artificial intelligence may replace human work, leading to job displacement for some individuals.

FIG. 14

Write a poem about the winter in city Y.

In the winter of Y city, a silver-white world unfurled. Trees adorned with ice crystals, snowflakes danced and twirled. The streets fell silent, in tranquil serenity, People basked in the warm sun. Children built snowmen, engaged in snowball fights. This is our haven of peace, A place to let our worries cease.

FIG. 15

A

B

FIG. 16

```
                                                                            S1701
┌─────────────────────────────────────────────────────────────┐
│              Obtain first sample data                         │
└─────────────────────────────────────────────────────────────┘
                              │
                              ▼
                                                                            S1702
┌─────────────────────────────────────────────────────────────┐
│              Obtain second sample data                        │
└─────────────────────────────────────────────────────────────┘
                              │
                              ▼
                                                                            S1703
┌─────────────────────────────────────────────────────────────┐
│     Process a first sample initial input by using a deep      │
│     learning model, to obtain a first predicted output        │
└─────────────────────────────────────────────────────────────┘
                              │
                              ▼
                                                                            S1704
┌─────────────────────────────────────────────────────────────┐
│     Adjust a parameter of the deep learning model based on a  │
│     comparison between the first sample output and the first  │
│                   predicted output                            │
└─────────────────────────────────────────────────────────────┘
                              │
                              ▼
                                                                            S1705
┌─────────────────────────────────────────────────────────────┐
│   Process a second sample initial input by using the deep     │
│   learning model, to obtain a second predicted output         │
└─────────────────────────────────────────────────────────────┘
                              │
                              ▼
                                                                            S1706
┌─────────────────────────────────────────────────────────────┐
│     Adjust a parameter of the deep learning model based on a  │
│     comparison between a second sample output and the second  │
│                   predicted output                            │
└─────────────────────────────────────────────────────────────┘
```

FIG. 17

```
┌─────────────────────────────────────────┐
│                                         │
│      Structured knowledge 1810          │
│                                         │
└─────────────────────────────────────────┘
                    │
┌─────────────────────────────────────────┐
│                                         │
│      Language template 1820             │
│                                         │
└─────────────────────────────────────────┘
                    │
┌─────────────────────────────────────────┐
│                                         │
│      Natural language data 1830         │
│                                         │
└─────────────────────────────────────────┘
```

FIG. 18

S1901

Obtain first sample data

S1902

Obtain second sample data

S1903

Process a first sample initial input by using a deep learning model, to obtain a first predicted output

S1904

Adjust a parameter of the deep learning model based on a comparison between the first sample output and the first predicted output

S1905

Process a second sample initial input by using the deep learning model, to obtain a second predicted output

S1906

Adjust a parameter of the deep learning model based on a comparison between a second sample output and the second predicted output

S1907

Obtain third sample data

S1908

Perform a ranking operation on a plurality of sample search results based on a matching degree between each of the plurality of sample search results and a third sample reply

S1909

Train a retrieval model based on the ranked plurality of sample search results

FIG. 19

S1908

S2001

Select a first sample search result having the highest current matching degree from a plurality of sample search results by screening

S2002

Delete overlapping content between a third sample reply and the first sample search result to update a third sample reply

S2003

Repeat the ranking operation on remaining parts of the plurality of sample search results based on a matching degree between each of the remaining parts and the updated third sample reply until completion of ranking all of the plurality of sample search results

FIG. 20

S2101

Obtain first sample data

S2102

Obtain second sample data

S2103

Process a first sample initial input by using a deep learning model, to obtain a first predicted output

S2104

Adjust a parameter of the deep learning model based on a comparison between a first sample output and the first predicted output

S2105

Process a second sample initial input by using the deep learning model, to obtain a second predicted output

S2106

Adjust a parameter of the deep learning model based on a comparison between a second sample output and the second predicted output

S2107

Obtain fourth sample data

S2108

Obtain a predicted memory result determined by an external memory bank based on a fourth sample intermediate input

S2109

Adjust a parameter of the external memory bank based on a comparison between the predicted memory result and a sample memory result

S2110

Determine a fourth sample target input for the deep learning model based at least on a fourth sample initial input and the sample memory result

S2111

Process the fourth sample target input by using the deep learning model, to obtain a fourth predicted reply

S2112

Adjust a parameter of the deep learning model based on a comparison between a fourth sample reply and the fourth predicted reply

FIG. 21

**Data generation apparatus 2200**

First determining unit 2210

First obtaining unit 2220

Second obtaining unit 2230

Second determining unit 2240

Third obtaining unit 2250

FIG. 22

**Training apparatus 2300**

| Fourth obtaining unit 2310 | Fifth obtaining unit 2320 |
|---|---|
| First processing unit 2330 | Second processing unit 2350 |
| First parameter adjustment unit 2340 | Second parameter adjustment unit 2360 |

FIG. 23

2400

2401
Computing
unit

2402
ROM

2403
RAM

2404

2405
I/O interface

2406
Input unit

2407
Output unit

2408
Storage unit

2409
Communications
unit

FIG. 24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Toolformer: Language Models Can Teach Themselves to Use Tools. **SCHICK TIMO et al.** arXiv. Cornell University, 09 February 2023, 1-17